# EUROPEAN PATENT APPLICATION

(11) **EP 4 561 227 A1**
(43) Date of publication of application: **28.05.2025**
(21) Application number: 23849114.6
(22) Date of filing: 29.06.2023
(51) Int. Cl.: H04W 72/04

(54) **RESOURCE CONFIGURATION METHOD AND COMMUNICATION APPARATUS**

(30) Priority: 03.08.2022 CN 202210927210
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN); GONG, Bo, Shenzhen, Guangdong 518129 (CN)
(74) Representative: Grünecker Patent- und Rechtsanwälte PartG mbB
(86) International application number: PCT/CN2023/104175
(87) International publication number: WO 2024/027404

(57) **Abstract**

This application relates to the communication field, and in particular, to a resource configuration method and a communication apparatus. The solutions are applicable to a WLAN system that supports 802.11 series protocols, for example, a next-generation Wi-Fi protocol of IEEE 802.11ax, like 802.11be, Wi-Fi 7, or EHT, and a next-generation protocol of 802.11be like Wi-Fi 8, and are also applicable to a UWB-based wireless personal area network system and a sensing system. In the method, a first resource unit indicated by a first station to a second station includes a subcarrier in a difference set between a subcarrier set of a second resource unit and a subcarrier set of a first frequency range. A part of subcarriers of the second resource unit are located in the first frequency range, and therefore such a manner can avoid an intersection set between the indicated first resource unit and a subcarrier of the first frequency range, that is, avoid a resource collision, and maintain normal communication between stations.

## Description

This application claims priority to Chinese Patent Application No. 202210927210.X, filed on August 3, 2022 and entitled "RESOURCE CONFIGURATION METHOD AND COMMUNICATION APPARATUS", which is incorporated herein by reference in its entirety.

### TECHNICAL FIELD

This application relates to the field of communication technologies, and in particular, to a resource configuration method and a communication apparatus.

### BACKGROUND

Since development of a wireless local area network (wireless local area network, WLAN), an orthogonal frequency division multiple access (orthogonal frequency division multiple access, OFDMA) technology and a multi-user multiple-input multiple-output (multi-user multiple-input multiple-output, MU-MIMO) technology are newly introduced. An entire bandwidth is classified into a plurality of resource units (resource units, RUs). In other words, a frequency domain resource of a user is not allocated in a unit of a resource unit instead of a channel. A resource unit may be classified into a continuous resource unit and a distributed resource unit.

In some scenarios, a distributed resource unit allocated to a station may collide with another resource unit or channel. This affects normal communication between stations.

### SUMMARY

This application provides a resource configuration method and a communication apparatus, to avoid a resource collision and maintain normal communication between stations.

According to a first aspect, a resource configuration method is provided. The method may be performed by a first station. The first station may be a component (for example, a chip, a circuit, or a module) configured in the first station.

The method includes: The first station generates first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit; and the first station sends the first information to a second station.

Based on the foregoing solution, the first station can indicate the first resource unit to the second station, and the first resource unit includes the subcarrier in the difference set between the subcarrier set of the second resource unit and the subcarrier set of the first frequency range, that is, the first resource unit does not include a subcarrier of the first frequency range. The part of subcarriers of the second resource unit are located in the first frequency range, and therefore such a manner can avoid an intersection set between the indicated first resource unit and the subcarrier of the first frequency range, that is, avoid a resource collision, and maintain normal communication between stations.

With reference to the first aspect, in some implementations of the first aspect, the method further includes: The first station sends second information to the second station, where the second information indicates the second station to transmit data on the first resource unit or transmit data on the second resource unit.

In an implementation, a subcarrier of the first resource unit includes the subcarrier in the difference set between the subcarrier set of the second resource unit and the subcarrier set of the first frequency range.

For example, the first RU is a punctured distributed RU, and the second RU is a non-punctured distributed RU.

Optionally, the second information may be understood as indicating whether the first RU is a punctured distributed RU.

With reference to the first aspect, in some implementations of the first aspect, the first frequency range includes a frequency range occupied by a punctured channel.

Based on the foregoing solution, the subcarrier of the first resource unit can be prevented from being located in the punctured channel, and a resource is appropriately configured.

With reference to the first aspect, in some implementations of the first aspect, the first frequency range includes a frequency range occupied by one or more continuous resource units.

Based on the foregoing solution, a collision between the subcarrier of the first resource unit and a subcarrier of another resource unit can be avoided, and the resource is appropriately configured.

With reference to the first aspect, in some implementations of the first aspect, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

In other words, in this implementation, the subcarrier of the first resource unit include two parts. A first part is the subcarrier in the difference set between the subcarrier set of the second resource unit and the subcarrier set of the first frequency range, and a second part is the subcarrier in the first subcarrier set.

Based on the foregoing solution, a quantity of subcarriers of the first resource unit may be the same as or close to a quantity of subcarriers of the second resource unit, to help allocate more sufficient resources.

With reference to the first aspect, in some implementations of the first aspect, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

With reference to the first aspect, in some implementations of the first aspect, the first frequency range is a frequency range occupied by a first continuous resource unit, and the third resource unit is a distributed resource unit corresponding to the first continuous resource unit.

With reference to the first aspect, in some implementations of the first aspect, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

With reference to the first aspect, in some implementations of the first aspect, the method further includes: The first station sends third information to the second station, where the third information indicates whether the first resource unit includes the subcarrier in the first subcarrier set.

For example, the first RU is a distributed RU whose size is supplemented, and the second RU is a non-punctured distributed RU.

Optionally, the third information may be understood as indicating whether the first resource unit is a distributed RU whose size is supplemented.

With reference to the first aspect, in some implementations of the first aspect, the first information is an index entry, and there is a correspondence between the index entry and the first resource unit.

With reference to the first aspect, in some implementations of the first aspect, the first information is carried in a triggered response scheduling control subfield (triggered response scheduling control subfield, TRS control subfield) or a user information (user info) field in a trigger frame.

With reference to the first aspect, in some implementations of the first aspect, the first information includes first sub-information and second sub-information, the first sub-information indicates the first frequency range, and the second sub-information indicates the second resource unit.

With reference to the first aspect, in some implementations of the first aspect, the first sub-information is carried in a common information field in the trigger frame, and the second sub-information is carried in a user information field in the trigger frame.

According to a second aspect, a resource configuration method is provided. The method may be performed by a second station. The second station may be a component (for example, a chip, a circuit, or a module) configured in the second station.

The method includes: The second station receives first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit; and the second station transmits data on the first resource unit.

With reference to the second aspect, in some implementations of the second aspect, the method further includes: The second station receives second information, where the second information indicates the second station to transmit the data on the first resource unit or transmit the data on the second resource unit.

For example, the first RU is a punctured distributed RU, and the second RU is a non-punctured distributed RU.

Optionally, the second information may be understood as indicating whether the first RU is a punctured distributed RU.

Optionally, the second information may be understood as indicating that the first resource unit is a non-punctured distributed resource unit or a punctured distributed RU.

With reference to the second aspect, in some implementations of the second aspect, the first frequency range includes a frequency range occupied by a punctured channel.

With reference to the second aspect, in some implementations of the second aspect, the first frequency range includes a frequency range occupied by one or more continuous resource units.

With reference to the second aspect, in some implementations of the second aspect, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

With reference to the second aspect, in some implementations of the second aspect, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

With reference to the second aspect, in some implementations of the second aspect, the first frequency range is a frequency range occupied by a first continuous resource unit, and the third resource unit is a distributed resource unit corresponding to the first continuous resource unit.

With reference to the second aspect, in some implementations of the second aspect, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

With reference to the second aspect, in some implementations of the second aspect, the method further includes: The second station receives third information, where the third information indicates whether the first resource unit includes the subcarrier in the first subcarrier set.

For example, the first RU is a distributed RU whose size is supplemented, and the second RU is a non-punctured distributed RU.

Optionally, the third information may be understood as indicating whether the first resource unit is a distributed RU whose size is supplemented.

Optionally, the third information may be understood as indicating that the first resource unit is a punctured distributed resource unit or a distributed RU whose size is supplemented.

With reference to the second aspect, in some implementations of the second aspect, the first information is an index entry, and there is a correspondence between the index entry and the first resource unit.

With reference to the second aspect, in some implementations of the second aspect, the first information is carried in a triggered response scheduling control subfield or a user information field in a trigger frame.

With reference to the second aspect, in some implementations of the second aspect, the first information includes first sub-information and second sub-information, the first sub-information indicates the first frequency range, and the second sub-information indicates the second resource unit.

With reference to the second aspect, in some implementations of the second aspect, the first sub-information is carried in a common information field in the trigger frame, and the second sub-information is carried in a user information field in the trigger frame.

It should be understood that, for beneficial effect of the second aspect and the implementations of the second aspect, refer to the first aspect and the implementations of the first aspect.

According to a third aspect, a communication apparatus is provided. The apparatus may be performed by a first station. The first station may be a component (for example, a chip, a circuit, or a module) configured in the first station.

The apparatus includes: a processing unit, configured to generate first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit; and a transceiver unit, configured to send the first information to a second station.

With reference to the third aspect, in some implementations of the third aspect, the transceiver unit is further configured to: send second information to the second station, where the second information indicates the second station to transmit data on the first resource unit or transmit data on the second resource unit.

With reference to the third aspect, in some implementations of the third aspect, the first frequency range includes a frequency range occupied by a punctured channel.

With reference to the third aspect, in some implementations of the third aspect, the first frequency range includes a frequency range occupied by one or more continuous resource units.

With reference to the third aspect, in some implementations of the third aspect, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

With reference to the third aspect, in some implementations of the third aspect, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

With reference to the third aspect, in some implementations of the third aspect, the first frequency range is a frequency range occupied by a first continuous resource unit, and the third resource unit is a distributed resource unit corresponding to the first continuous resource unit.

With reference to the third aspect, in some implementations of the third aspect, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

With reference to the third aspect, in some implementations of the third aspect, the transceiver unit is further configured to send third information to the second station, where the third information indicates whether the first resource unit includes the subcarrier in the first subcarrier set.

With reference to the third aspect, in some implementations of the third aspect, the first information is an index entry, and there is a correspondence between the index entry and the first resource unit.

With reference to the third aspect, in some implementations of the third aspect, the first information is carried in a triggered response scheduling control subfield or a user information field in a trigger frame.

With reference to the third aspect, in some implementations of the third aspect, the first information includes first sub-information and second sub-information, the first sub-information indicates the first frequency range, and the second sub-information indicates the second resource unit.

With reference to the third aspect, in some implementations of the third aspect, the first sub-information is carried in a common information field in the trigger frame, and the second sub-information is carried in a user information field in the trigger frame.

According to a fourth aspect, a communication apparatus is provided. The apparatus may be performed by a second station. The second station may be a component (for example, a chip, a circuit, or a module) configured in the second station.

The apparatus includes: a transceiver unit, configured to receive first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit; and the transceiver unit is further configured to transmit data on the first resource unit.

With reference to the fourth aspect, in some implementations of the fourth aspect, the transceiver unit is further configured to: receive second information, where the second information indicates the second station to transmit data on the first resource unit or transmit data on the second resource unit.

With reference to the fourth aspect, in some implementations of the fourth aspect, the first frequency range includes a frequency range occupied by a punctured channel.

With reference to the fourth aspect, in some implementations of the fourth aspect, the first frequency range includes a frequency range occupied by one or more continuous resource units.

With reference to the fourth aspect, in some implementations of the fourth aspect, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

With reference to the fourth aspect, in some implementations of the fourth aspect, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

With reference to the fourth aspect, in some implementations of the fourth aspect, the first frequency range is a frequency range occupied by a first continuous resource unit, and the third resource unit is a distributed resource unit corresponding to the first continuous resource unit.

With reference to the fourth aspect, in some implementations of the fourth aspect, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

With reference to the fourth aspect, in some implementations of the fourth aspect, the transceiver unit is further configured to receive third information by the second station, where the third information indicates whether the first resource unit includes the subcarrier in the first subcarrier set.

With reference to the fourth aspect, in some implementations of the fourth aspect, the first information is an index entry, and there is a correspondence between the index entry and the first resource unit.

With reference to the fourth aspect, in some implementations of the fourth aspect, the first information is carried in a triggered response scheduling control subfield or a user information field in a trigger frame.

With reference to the fourth aspect, in some implementations of the fourth aspect, the first information includes first sub-information and second sub-information, the first sub-information indicates the first frequency range, and the second sub-information indicates the second resource unit.

With reference to the fourth aspect, in some implementations of the fourth aspect, the first sub-information is carried in a common information field in the trigger frame, and the second sub-information is carried in a user information field in the trigger frame.

According to a fifth aspect, a communication apparatus is provided, and includes a processor and a memory. Optionally, the apparatus may further include a transceiver. The memory is configured to store a computer program. The processor is configured to: invoke the computer program stored in the memory and run the computer program, and control the transceiver to receive and send a signal, so that the communication apparatus performs the method according to any one of the first aspect and the second aspect or the possible implementations of these aspects.

According to a sixth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained after processing by the processor, so that the method according to any one of the first aspect and the second aspect or the possible implementations of these aspects is performed.

According to a seventh aspect, a chip is provided, and includes a processor and a memory. The memory is configured to store a program or instructions, and when the program or the instructions are executed by the processor, the chip is enabled to perform the method according to any one of the first aspect and the second aspect or the possible implementations of these aspects.

According to an eighth aspect, a computer-readable storage medium is provided. The computer-readable storage medium stores computer instructions, and when the computer instructions are run on a computer, the method according to any one of the first aspect and the second aspect or the possible implementations of these aspects is performed.

According to a ninth aspect, a computer program product is provided. The computer program product includes computer program code, and when the computer program code is run on a computer, the method according to any one of the first aspect and the second aspect or the possible implementations of these aspects is performed.

According to a tenth aspect, a wireless communication system is provided, and includes the first station according to the first aspect and the second station according to the second aspect.

### BRIEF DESCRIPTION OF DRAWINGS

FIG. 1 is a diagram of an application scenario to which an embodiment of this application is applicable;
FIG. 2(a) to FIG. 2(c) show a tone plan (tone plan) and continuous resource units that are currently defined in the 802.11be standard;
FIG. 3(a) and FIG. 3(b) are diagrams of tone plans of two distributed RUs;
FIG. 4 is a diagram of a tone plan of other distributed RUs;
FIG. 5 is a diagram of channel puncture on an 80 MHz bandwidth;
FIG. 6 is a diagram of a tone plan;
FIG. 7 is a schematic flowchart of a resource configuration method 200 according to an embodiment of this application;
FIG. 8 is a diagram of a tone plan according to an embodiment of this application;
FIG. 9 is another diagram of a tone plan according to an embodiment of this application;
FIG. 10 is another diagram of a tone plan according to an embodiment of this application;
FIG. 11 is another diagram of a tone plan according to an embodiment of this application;
FIG. 12 is another diagram of a tone plan according to an embodiment of this application;
FIG. 13 is another diagram of a tone plan according to an embodiment of this application;
FIG. 14 is another diagram of a tone plan according to an embodiment of this application;
FIG. 15 is a diagram of a user information list field in a trigger frame according to an embodiment of this application;
FIG. 16 is a diagram of a communication apparatus according to an embodiment of this application;
FIG. 17 is another diagram of a structure of a communication apparatus according to an embodiment of this application; and
FIG. 18 is another diagram of a structure of a communication apparatus according to an embodiment of this application.

### DESCRIPTION OF EMBODIMENTS

The following describes technical solutions of this application with reference to accompanying drawings.

The technical solutions provided in embodiments of this application are applicable to a wireless local area network (wireless local area network, WLAN) scenario supporting, for example, IEEE 802.11-related standards such as the 802.11a/b/g standard, the 802.11n standard, the 802.11ac standard, the 802.11ax standard, a next-generation Wi-Fi protocol of IEEE 802.11ax like 802.11be, Wi-Fi 7, an extremely high throughput (extremely high throughput, EHT), 802.11ad, 802.11ay, or 802.11bf, for another example, a next generation protocol of 802.11be or Wi-Fi 8; or applicable to an ultra-wideband (ultra-wideband, UWB)-based wireless personal area network system, for example, 802.15 series standards; or applicable to a sensing (sensing) system, for example, 802.11bf series standards. The 802.11n standard is referred to as a high throughput (high throughput, HT), the 802.11ac standard is referred to as a very high throughput (very high throughput, VHT), the 802.11ax standard is referred to as high efficiency (high efficient, HE), and the 802.11be standard is referred to as an extremely high throughput (extremely high throughput, EHT).

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any appropriate wireless network.

The technical solutions in embodiments of this application are alternatively be applied to various communication systems, for example, a WLAN communication system, a wireless fidelity (wireless fidelity, Wi-Fi) system, a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a future 6th generation (6th generation, 6G) system, an internet of things (internet of things, IoT) network, or a vehicle-to-everything (vehicle to x, V2X).

The foregoing communication systems to which this application is applicable are merely examples for descriptions, and the communication systems to which this application is applicable are not limited thereto. This is uniformly described herein, and details are not described below again.

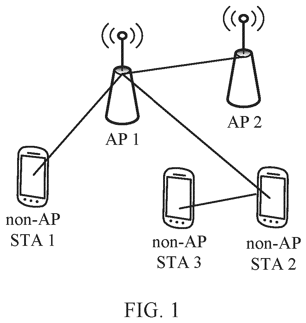

FIG. 1 is a diagram of an application scenario to which an embodiment of this application is applicable. As shown in FIG. 1, a resource configuration method provided in this application is applicable to data communication between stations (stations, STAs). The station may be an access point (access point, AP) station, or may be a non-access point station (non-access point station, non-AP STA). The access point station and the non-access point station are briefly referred to as an AP and a non-AP station respectively. Specifically, the solutions in this application are applicable to data communication between an AP and one or more non-AP stations (for example, data communication between an AP 1 and a non-AP STA 1 and a non-AP STA 2), or applicable to data communication between APs (for example, data communication between an AP 1 and an AP 2) and data communication between non-AP STAs (for example, data communication between a non-AP STA 2 and a non-AP STA 3).

An access point may be an access point used by a terminal (for example, a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects a wired network and a wireless network. A main function of the access point is to connect various wireless network clients together and then connect the wireless network to the Ethernet.

Specifically, the access point may be a terminal or a network device with a Wi-Fi chip. The network device may be a router, a relay station, a vehicle-mounted device, a wearable device, a network device in a 5G network, a network device in a future 6G network, a network device in a public land mobile network (public land mobile network, PLMN), or the like. This is not limited in embodiments of this application. The access point may be a device supporting the 802.11be standard. Alternatively, the access point may be a device that supports a plurality of WLAN standards of the 802.11 family, such as 802.11ax, 802.11ac, 802.11n, 802.11g, 802.11b, 802.11a, and a next generation of 802.11be. The access point in this application may be a high efficient (high efficient, HE) AP, an extremely high throughput (extremely high throughput, EHT) AP, or an access point applicable to a future generation Wi-Fi standard.

The non-AP station may be a wireless communication chip, a wireless sensor, a wireless communication terminal, or the like, and may also be referred to as a user, user device (user equipment, UE), an access terminal, a subscriber unit, a subscriber station, a mobile station, a remote station, a remote terminal, a mobile device, a user terminal, a terminal, a wireless communication device, a user agent, or a user apparatus. The non-AP station may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an internet of things device, a wearable device, a terminal device in a 5G network, a terminal device in a future 6G network, a terminal device in a PLMN, or the like. This is not limited in embodiments of this application.

For example, the non-AP station may be a mobile phone, a tablet computer, a set-top box, a smart television, a smart wearable device, a vehicle-mounted communication device, or a computer that supports a Wi-Fi communication function; or an internet of things (internet of things, IoT) node or a sensor that supports a Wi-Fi communication function; or a smart camera, a smart remote control, a smart water or electricity meter in a smart home, or a sensor in a smart city that supports a Wi-Fi communication function. Optionally, the non-AP station may support the 802.11be standard. Alternatively, the non-AP station may support a plurality of WLAN standards of the 802.11 family, such as 802.11ax, 802.11ac, 802.11n, 802.11g, 802.11b, 802.11a, and a next generation of 802.11be.

With the development of a wireless local area network (wireless local area network, WLAN), an AP and a STA may communicate with each other by using an orthogonal frequency division multiple access (orthogonal frequency division multiple access, OFDMA) technology, or may perform wireless communication by using a multi-user multiple-input multiple-output (multi-user multiple-input multiple-output, MU-MIMO) technology.

In OFDMA and MU-MIMO transmission scenarios, a WLAN protocol classifies a spectrum bandwidth into several resource units (resource units, RUs). For example, the 802.11ax protocol currently supports the following bandwidth configurations: 20 MHz (megahertz), 40 MHz, 80 MHz, 160 MHz, and 80 MHz+80 MHz. A difference between 160 MHz and 80 MHz+80 MHz lies in that the former is a continuous frequency band, and two 80 MHz of the latter may be separated. In other words, 160 MHz formed by 80 MHz+80 MHz is discontinuous. For another example, the 802.11be protocol supports the following bandwidth configurations: 20 MHz, 40 MHz, 80 MHz, 160 MHz, and 320 MHz bandwidths.

According to the IEEE 802.11ax protocol, for the bandwidths of 20 MHz, 40 MHz, 80 MHz, and 160 MHz, a spectrum bandwidth may be classified into a plurality of types of resource units. A resource unit may be classified into a continuous resource unit and a distributed resource unit.

The following briefly describes related concepts that may be in embodiments of this application.

### 1. Continuous RU (continuous RU, CRU)

In this application, a continuous resource unit is an RU including a plurality of continuous subcarriers; or a continuous RU is an RU including two continuous subcarrier groups, a plurality of subcarriers included in each group of continuous subcarrier groups are continuous, and the two groups of subcarrier groups are spaced by only one or more of a guard (guard) subcarrier, a null subcarrier, or a direct current (direct current, DC) subcarrier. "Continuous" means that subcarriers are continuous.

The continuous resource unit is also referred to as a conventional resource unit or a regular resource unit. Certainly, the continuous resource unit may also have another name. A specific name of the continuous resource unit is not limited in embodiments of this application.

In embodiments of this application, a continuous RU including K subcarriers is referred to as a continuous K-tone RU. For example, a continuous 26-tone RU is a continuous RU including 26 subcarriers. In other words, a concept of the continuous K-tone RU is the same as a concept of a K-tone RU in the existing 802.11ax standard.

It should be understood that the plurality of subcarriers of the continuous RU may be continuous, or the continuous RU may include two continuous subcarrier groups, and the two continuous subcarrier groups are discontinuous. For example, a 26-tone RU including a group of 13 continuous subcarriers and another group of 13 continuous subcarriers is a continuous RU. Similarly, a 996-tone RU including a group of 484 continuous subcarriers and another group of 484 continuous subcarriers is a continuous RU. Such RU may also be referred to as a special continuous RU or a generalized continuous RU. The continuous RU in this application also includes the special continuous RU or the generalized continuous RU.

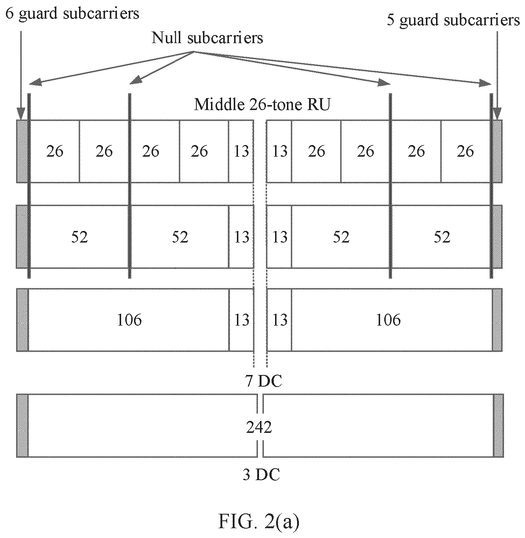

FIG. 2(a) to FIG. 2(c) show a tone plan (tone plan) and continuous resource units that are currently defined in the 802.11be standard. The continuous resource units include a 26-tone RU, a 52-tone RU, a 106-tone RU, a 242-tone RU (a maximum RU in a 20 MHz bandwidth), a 484-tone RU (a maximum RU in a 40 MHz bandwidth), a 996-tone RU (a maximum RU in an 80 MHz bandwidth), and a 2*996-tone RU (a maximum RU in a 160 MHz bandwidth). Each RU includes continuous subcarriers. For example, the 26-tone RU includes 26 continuous subcarriers. In this application, the 26-tone RU is denoted as a 26-tone RU, the 52-tone RU is denoted as a 52-tone RU, and on the rest can be deduced by analogy. In FIG. 2(a) to FIG. 2(c), the 26-tone RU, the 52-tone RU, the 106-tone RU, the 242-tone RU, the 484-tone RU, the 996-tone RU, and the like are all continuous resource units. As shown in FIG. 2(a) to FIG. 2(c), in addition to an RU for data transmission, an entire bandwidth further includes one or more of a guard subcarrier, a null subcarrier, and a direct current subcarrier.

FIG. 2(a) is a diagram of a tone plan and continuous resource unit distribution on 20 MHz. As shown in FIG. 2(a), when the bandwidth is 20 MHz, the entire bandwidth may include the entire 242-tone RU, or may include various combinations of 26-tone RUs, 52-tone RUs, and 106-tone RUs. In FIG. 2(a), "3 DC" represents three direct current subcarriers, and "7 DC" represents seven direct current subcarriers.

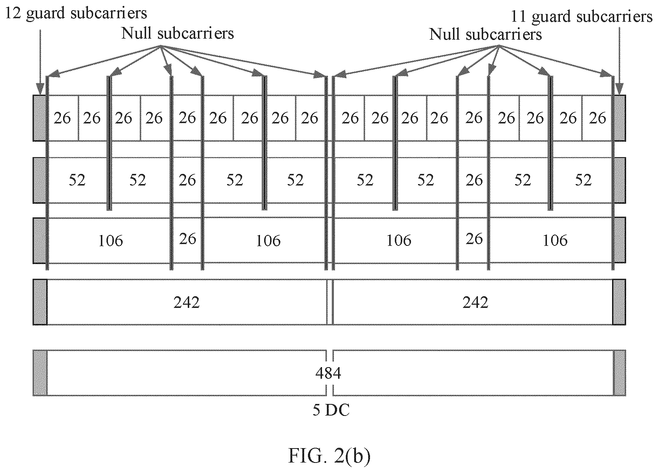

FIG. 2(b) is a diagram of a tone plan and continuous resource unit distribution on 40 MHz. As shown in FIG. 2(b), when the bandwidth is 40 MHz, the entire bandwidth is roughly equivalent to replication of tone plans on 20 MHz bandwidths, and the entire bandwidth may include the entire 484-tone RU, or may include various combinations of 26-tone RUs, 52-tone RUs, 106-tone RUs, and 242-tone RUs. In FIG. 2(b), "5 DC" represents five direct current subcarriers.

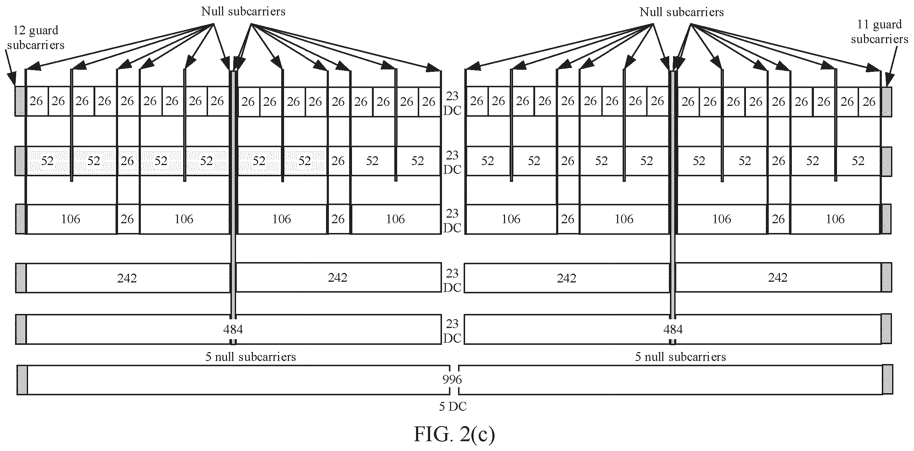

FIG. 2(c) is a diagram of a tone plan and continuous resource unit distribution on 80 MHz. As shown in FIG. 2(c), when the bandwidth is 80 MHz, the entire bandwidth is roughly equivalent to replication of tone plans on two 40 MHz bandwidths, the entire bandwidth may include the four 242-tone RUs, or may include the entire 996-tone RU, or may include various combinations of 26-tone RUs, 52-tone RUs, 106-tone RUs, 242-tone RUs, and 484-tone RUs. In FIG. 2(c), "5 DC" represents five direct current subcarriers, and "23 DC" represents 23 direct current subcarriers.

It should be understood that, when the bandwidth is 160 MHz, the entire bandwidth may be considered as replication of tone plans on two 80 MHz bandwidths, and the entire bandwidth may include the entire 2*996-tone RU, or may include various combinations of 26-tone RUs, 52-tone RUs, 106-tone RUs, 242-tone RUs, 484-tone RUs, and 996-tone RUs. Similarly, when a bandwidth is 320 MHz, the entire bandwidth may be considered as replication of tone plans on four 80 MHz bandwidths, and the entire bandwidth may include resource units in a unit of four 996-tone RUs. For simplicity, tone plans and RU distribution on 160 MHz and 320 MHz are not separately described again.

In various tone plans shown in FIG. 2(a) to FIG. 2(c), the 242-tone RU is used as a unit. Left sides of FIG. 2(a) to FIG. 2(c) may be considered as lowest frequencies, and right sides of FIG. 2(a) to FIG. 2(c) may be considered as highest frequencies. From left to right, the 242-tone RU can be numbered as 1^{st}, 2^{nd}, ..., and 16^{th}. It should be noted that in a data field, a maximum of 16 242-tone RUs one-to-one correspond to 16 20-MHz channels in ascending order of frequencies.

It can be seen from FIG. 2(a) to FIG. 2(c) that a bandwidth of one 26-tone RU is roughly 2 MHz, a bandwidth of one 52-tone RU is roughly 4 MHz, a bandwidth of one 106-tone RU is roughly 8 MHz, and a bandwidth of one 242-tone RU is roughly 20 MHz. A bandwidth of another RU may be correspondingly added or multiplied, and details are not described herein.

### 2. Distributed RU (distributed RU, DRU)

Compared with a continuous RU, an RU including a plurality of subcarrier groups distributed in frequency domain may be referred to as a distributed RU. In other words, a distributed RU includes a plurality of subcarrier groups, and any two subcarrier groups are distributed in frequency domain. One subcarrier group includes one subcarrier, or one subcarrier group includes at least two continuous subcarriers. In other words, one subcarrier group includes one subcarrier or includes a plurality of continuous subcarriers. Specifically, the distributed RU is subcarriers that do not belong to a resource unit and that exist between all (or at least most) most similar data subcarriers belonging to the resource unit, and may also be understood as that locations of the subcarriers of the RU are discontinuous in a bandwidth.

The distributed RU may also be referred to as a distributed RU (distributed RU, DRU). Certainly, in another embodiment, the distributed RU may have another name. A name of the distributed RU is not limited in this application. In this application, a quantity of subcarrier groups included in one distributed RU is greater than or equal to 2.

In embodiments of this application, a distributed RU including K subcarriers may be referred to as a distributed K-tone RU. For example, a distributed 26-tone RU is a distributed RU including 26 subcarriers. For a value of K, refer to a value of K for a continuous RU. Certainly, the value of K may be different from the value of K used for the continuous RU. For example, when a bandwidth is 20 MHz, 20 MHz may include a combination of one or more of a distributed 26-tone RU, a distributed 52-tone RU, a distributed 106-tone RU, and a distributed 242-tone RU. Subcarriers in the "K subcarriers" include a pilot subcarrier and a data subcarrier.

In this application, one distributed RU and another distributed RU may form a distributed MRU. The distributed MRU can be allocated to one or more stations. For example, a distributed 242-tone RU and a distributed 484-tone RU may form a distributed 484+242-tone RU.

It should be noted that the special continuous RU or the generalized continuous RU mentioned above do not belong to the distributed RU in embodiments of this application. For example, in the foregoing example, the 26-tone RU including the group of 13 continuous subcarriers and the another group of 13 continuous subcarriers is not the distributed RU defined in this application, but the special continuous RU.

In some examples, quantities of subcarriers included in any two of the plurality of subcarrier groups included in the distributed RU may be the same or may be different. For example, a quantity of subcarriers in each subcarrier group may be 1. For another example, quantities of subcarriers in a part of subcarrier groups are 1, and a quantity of subcarriers in another part of subcarrier groups are 2. In other words, one distributed RU may include four subcarrier groups, and quantities of subcarriers in the four subcarrier groups may be 1, 1, 2, and 2 sequentially.

In some examples, when a quantity of subcarrier groups included in the distributed RU is greater than or equal to 3, in the plurality of distributed subcarrier groups included in the distributed RU, quantities of subcarriers between every two adjacent subcarrier groups may be the same or may be different. The every two adjacent subcarrier groups are two adjacent subcarrier groups in one distributed RU.

For example, in a distributed RU including three distributed subcarrier groups (denoted as a subcarrier group #1, a subcarrier group #2, and a subcarrier group #3), the subcarrier group #1 and the subcarrier group #2 are adjacent, and the subcarrier group #2 and the subcarrier group #3 are adjacent, that is, a frequency of a subcarrier included in the subcarrier group #1 is less than a frequency of a subcarrier included in the subcarrier group #2, and the frequency of the subcarrier included in the subcarrier group #2 is less than a frequency of a subcarrier included in the subcarrier group #3. In addition, a subcarrier with a maximum frequency in the subcarrier group #1 and a subcarrier with a minimum frequency in the subcarrier group #2 are discontinuous in frequency (or frequency domain), that is, the two subcarriers are spaced by K1 (K1≥1) subcarriers, or there is K1 subcarriers between the two subcarriers, and a subcarrier with a maximum frequency in the subcarrier group #2 and a subcarrier with a minimum frequency in the subcarrier group #3 are discontinuous in frequency (or frequency domain), that is, the two subcarriers are spaced by K2 (K2≥1) subcarriers, or there are K2 subcarriers between the two subcarriers. K1 may be equal to K2, or may not be equal to K2.

For another example, in a distributed RU including four distributed subcarrier groups (denoted as a subcarrier group #1, a subcarrier group #2, a subcarrier group #3, and a subcarrier group #4), the subcarrier group #1 and the subcarrier group #2 are adjacent, the subcarrier group #2 and the subcarrier group #3 are adjacent, and the subcarrier group #3 and the subcarrier group #4 are adjacent. In addition, a subcarrier with a maximum frequency in the subcarrier group #1 and a subcarrier with a minimum frequency in the subcarrier group #2 are separated by K1 (K1≥1) subcarriers, a subcarrier with a maximum frequency in the subcarrier group #2 and a subcarrier with a minimum frequency in the subcarrier group #3 are separated by K2 (K2≥1) subcarriers, and a subcarrier with a maximum frequency in the subcarrier group #3 and a subcarrier with a minimum frequency in the subcarrier group #4 are separated by K3 (K3≥1) subcarriers. K1, K2, and K3 may be equal, or two of the three may be equal, or any two of the three are unequal.

A plurality of continuous or discontinuous RUs may be supported to be allocated to one or more users, to improve RU allocation flexibility and/or frequency utilization. In this specification, the plurality of continuous or discontinuous RUs are referred to as a multi-RU (multi-RU, MRU). It should be understood that the MRU is an RU formed by combining the plurality of RUs.

Optionally, if the MRU includes the plurality of continuous RUs, the MRU may be referred to as a continuous MRU. For example, a plurality MRUs are introduced in the 802.11be protocol: One 52-tone RU and one 26-tone RU form a 52+26-tone RU, one 106-tone RU and one 26-tone RU form a 106+26-tone RU, one 484-tone RU and one 242-tone RU form a 484+242-tone RU, one 996-tone RU and one 484-tone RU form a 996+484-tone RU, one 242-tone RU, one 484-tone RU, and one 996-tone RU form a 242+484+996-tone RU, two 996-tone RUs and one 484-tone RU form a 2*996+484-tone RU, three 996-tone RUs form a 3*996-tone RU, three 996-tone RUs and one 484-tone RU form a 3*996+484-tone RU, and so on. The MRUs are continuous MRUs.

Optionally, if the MRU includes a plurality of distributed RUs, the MRU may be referred to as a distributed MRU or a distributed MRU.

There may be two distributed RUs. One distributed RU does not correspond to continuous RUs of a same size, and the other distributed RU corresponds to continuous RUs of a same size.

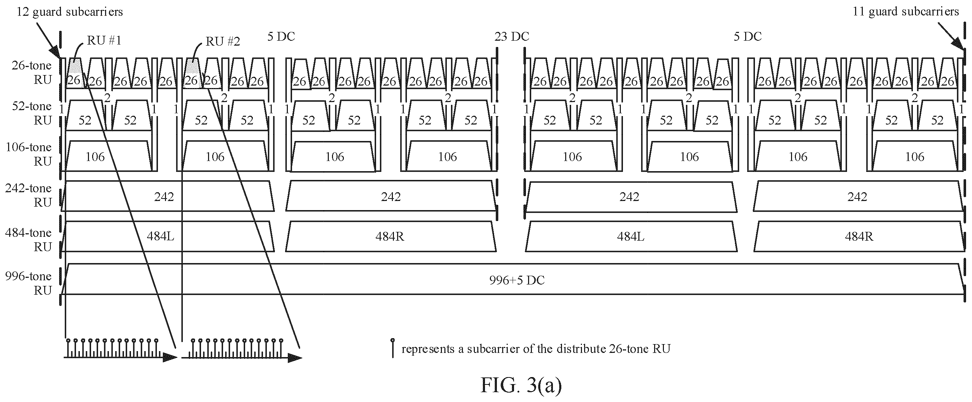

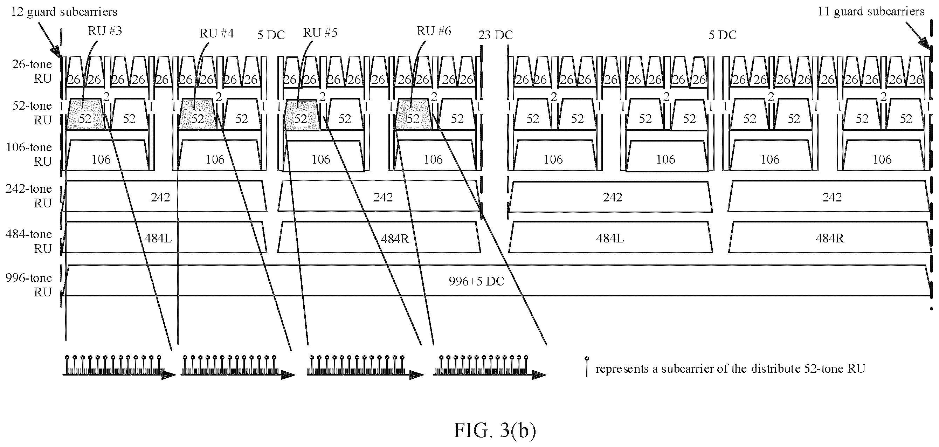

FIG. 3(a) and FIG. 3(b) are diagrams of tone plans of two distributed RUs. The distributed RUs shown in FIG. 3(a) and FIG. 3(b) do not correspond to continuous RUs of a same size. FIG. 3(a) shows a 26-tone RU with distributed subcarriers. The distributed 26-tone RU includes 13 subcarriers provided by each of two continuous 26-tone RUs (which are an RU #1 and an RU #2 in FIG. 3(a)), and the distributed 26-tone RU does not correspond to any continuous 26-tone RU of the RU #1 and the RU #2, that is, the distributed RU does not correspond to the continuous RUs of a same size. In addition, in the distributed 26-tone RU, there are 24 data (Data) subcarriers and 2 pilot (Pilot) subcarriers, and there are 26 subcarriers in total.

FIG. 3(b) shows a 52-tone RU with distributed subcarriers. The distributed 52-tone RU includes 13 subcarriers provided by each of four continuous 52-tone RUs (which are an RU #3, an RU #4, an RU #5, and an RU #6 in FIG. 3(b)), and the distributed 52-tone RU does not correspond to any 52-tone RU of the RU #3, the RU #4, the RU #5, and the RU #6, that is, the distributed RU does not correspond to the continuous RUs of a same size. In addition, in the distributed 52-tone RU, there are 48 data subcarriers and 4 pilot subcarriers and there are 52 subcarriers in total.

In FIG. 3(a) and FIG. 3(b), 484L and 484R represent a left half part and a right half part of a 484-tone RU, and each part includes 242 subcarriers. FIG. 3(a) and FIG. 3(b) are other diagrams of 484+5 DC.

It should be understood that, in FIG. 3(a) and FIG. 3(b), data subcarriers of these distributed RUs are designed in a pairwise non-adjacent form. This is merely an example of a design manner of the distributed RU. In addition to this manner, there may be another design. This is not limited in this application.

For the distributed RU that does not correspond to the continuous RUs of the same size, if the distributed RU needs to be indicated, an RU index generally needs to be added again. For example, if four distributed RUs need to be indicated, four rows of indications need to be added, and each row corresponds to one distributed RU.

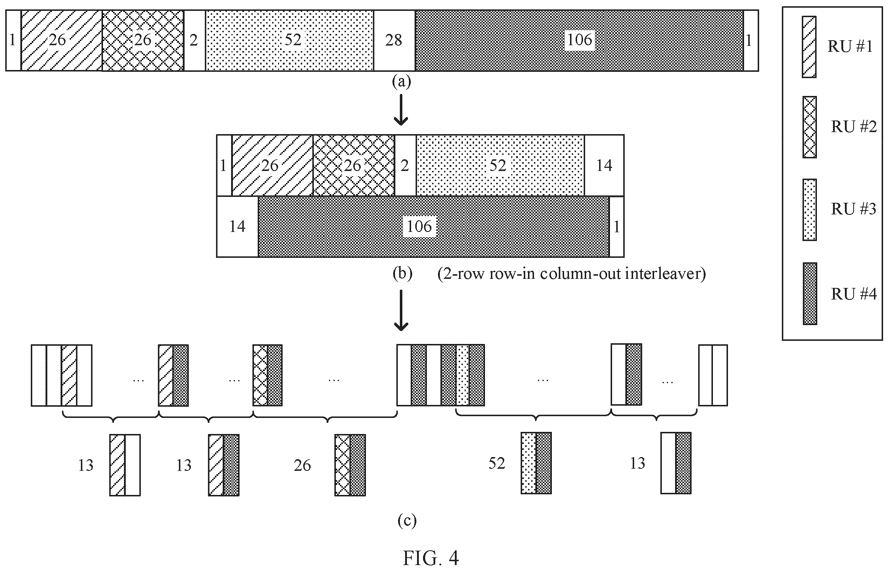

FIG. 4 is a diagram of a tone plan of other distributed RUs. The distributed RUs shown in FIG. 4 correspond to continuous RUs of a same size.

Specifically, in (a) in FIG. 4, four continuous RUs are included: a continuous RU #1, a continuous RU #2, a continuous RU #3, and a continuous RU #4. The continuous RU #1 includes 26 subcarriers, the continuous RU #2 includes 26 subcarriers, the continuous RU #3 includes 52 subcarriers, and the continuous RU #4 includes 106 subcarriers. Transformation from a conventional RU to a distributed RU may be implemented by using a 2-row row-in column-out interleaver. A mapping manner of the 2-row row-in column-out interleaver is shown in (b) in FIG. 4. Finally, distributed RUs, that is, a distributed RU #1, a distributed RU #2, a distributed RU #3, and a distributed RU #4 shown in (c) in FIG. 3 may be obtained. The distributed RU #1 includes 26 subcarriers, the distributed RU #2 includes 26 subcarriers, the distributed RU #3 includes 52 subcarriers, and the distributed RU #4 includes 106 subcarriers. That is, the distributed RU #1 corresponds to the continuous RU #1, the distributed RU #2 corresponds to the continuous RU #2, the distributed RU #3 corresponds to the continuous RU #3, and the distributed RU #4 corresponds to the continuous RU #4. In other words, the distributed RUs correspond to continuous RUs of a same size.

It should be understood that FIG. 4 shows merely an example of obtaining the distributed RUs from the continuous RUs. In this example, a subcarrier spacing of each distributed RU is 1, that is, there is one subcarrier that does not belong to the distributed RU between neighboring subcarriers of the distributed RU. In actual application, a quantity of rows and columns of an interleaver is designed, so that subcarriers in an obtained distributed RU can be more distributed.

For the distributed RU corresponding to the continuous RUs of the same size, if the distributed RU needs to be indicated, an indication manner of the continuous RUs may be reused, and on this basis, the distributed RU corresponding to the continuous RUs is further indicated. According to a correspondence specified in a protocol, a receiving end may learn of a frequency location of the distributed RU corresponding to the continuous RUs.

It should be understood that in this application, "correspondence" between the continuous RU and the distributed RU may be understood as a mapping relationship or a correspondence between the continuous RU and the distributed RU, or may be understood as a mapping manner between the continuous RU and the distributed RU. The mapping relationship, the correspondence, or the mapping manner may be expressed by using an interleaver.

Optionally, a correspondence between the continuous RU and the distributed RU is unique.

In addition, a pilot part of any one of the foregoing distributed RUs is not limited, and a manner in the continuous RU may be used or another design may be used.

It should be understood that a pilot in this application may also be referred to as a pilot subcarrier. Specifically, both a data subcarrier and a pilot subcarrier are subcarriers forming an RU. The data subcarrier carries data information from an upper layer, and the pilot subcarrier is used to transfer a fixed value, so that a receiving end estimates a phase and performs phase correction.

### 3. Preamble puncture (preamble puncture)

Some channels cannot be used in a period of time or specific time due to the following several possible reasons.
(1) A radar signal exists. In an unlicensed spectrum, if discovering a radar signal, a WLAN user needs to actively avoid the radar signal.
(2) An authorized user exists. An authorized user may exist on some specific channels. If discovering the authorized user, a WLAN user needs to actively avoid the authorized user.
(3) Interference from another user exists.

For these scenarios in which sub-channel transmission is not allowed, the 802.11ax protocol proposes a preamble puncture (preamble puncture) transmission method. In this method, a transmitting end can still transmit a physical layer protocol data unit (physical protocol data unit, PPDU) when some 20 MHz sub-channels are in a busy state.

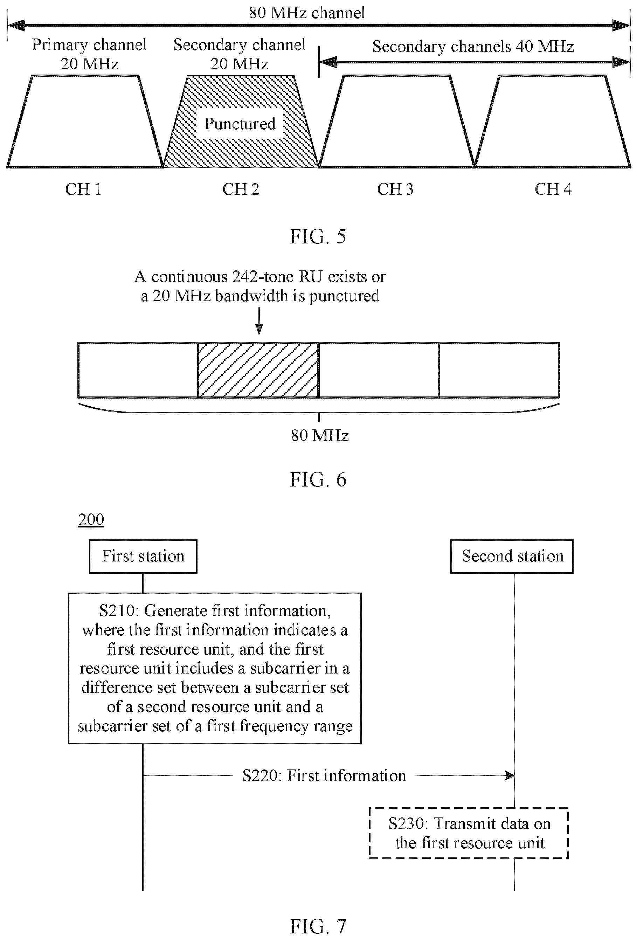

FIG. 5 is a diagram of channel puncture on an 80 MHz bandwidth. As shown in FIG. 5, the 80 MHz bandwidth includes four 20-MHz sub-channels denoted as a sub-channel 1 (a CH 1), a sub-channel 2 (a CH 2), a sub-channel 3 (a CH 3), and a sub-channel 4 (a CH 4) in ascending order of frequencies. The CH 1 is a primary channel, and the CH 2, the CH3, and the CH 4 are secondary channels. If the CH 2 of the sub-channel 1 (the CH 1) is punctured, the CH 2 cannot be used, but the CH 1, the CH 3, and the CH 4 can still be used.

### 4. Low power indoor (Low Power Indoor, LPI)

Currently, a low power indoor communication manner is defined in a WLAN, and strictly limits a maximum transmit power and a maximum power spectral density. For an AP, a maximum transmit power is 36 dBm (decibel-milliwatts, decibel-milliwatts), and a maximum power spectral density is 5 dBm/MHz (decibel-milliwatts/megahertz, decibel-milliwatts/megahertz). For a STA, a maximum transmit power is 24 dBm, and a maximum power spectral density is -1 dBm/MHz. Table 1 shows a relationship between a maximum transmit power and a bandwidth in an LPI scenario. A transmit power of a device is limited by both a maximum power and a maximum power spectral density. First, the transmit power cannot exceed a maximum power value, and second, a transmit power spectral density cannot exceed the maximum power spectral density. Compared with that of the maximum power, a limit of the maximum power spectral density is stricter, and an allowed maximum transmit power is generally more limited by a power spectral density. As a transmit bandwidth increases, maximum transmit powers of devices increase accordingly, as shown in Table 1. A limit of a specified maximum power can be reached only when a maximum bandwidth is 320 MHz. Under this bandwidth, only a lower power can be transmitted due to a limit of a maximum power spectrum density.

**Table 1 Relationship between a maximum transmit power (dBm) and a bandwidth in an LPI scenario**

| Transmit bandwidth | Maximum power of an AP | Maximum power of a STA |
|---|---|---|
| 20 MHz | 18 | 12 |
| 40 MHz | 21 | 15 |
| 80 MHz | 24 | 18 |
| 160 MHz | 27 | 21 |
| 320 MHz | 30 | 24 |

In the LPI scenario, a distributed RU can increase a subcarrier transmit power compared with a continuous RU. Specifically, because a quantity of subcarriers on each MHz decreases, and a power requirement for each MHz remains unchanged, a transmit power that can be sent by a subcarrier on each MHz increases.

In the low power indoor scenario, it is not necessarily a mandatory solution that a non-AP station supports a distributed RU. In other words, some non-AP stations support a distributed RU, and some non-AP stations may still support only a continuous RU.

In some other scenarios, some non-AP stations may support a distributed RU, and some non-AP stations may support only a continuous RU.

In the foregoing preamble puncture scenario, low power indoor scenario, or another scenario, a resource unit allocated to a station may collide with another resource unit or channel. Descriptions are provided below by using an example with reference to FIG. 6.

FIG. 6 is a diagram of a tone plan. As shown in FIG. 6, if an AP needs to allocate, to a STA, a distributed 242-tone RU that is distributed on 80 MHz, a part of subcarriers in the distributed 242-tone RU overlap with the continuous 242-tone RU or the 20 MHz punctured channel, and a collision occurs if any one of the following cases exists:
case 1: On the 80 MHz bandwidth, there is one continuous RU with 242 subcarriers, namely, a continuous 242-tone RU, on a second 20 MHz, where a possible cause of this case is that the continuous 242-tone RU has been allocated to a non-AP station that supports only a continuous RU; and
case 2: On the 80 MHz bandwidth, a second 20 MHz is punctured, where a possible cause of this case is that a radar signal exists on the 20 MHz.

Specifically, in the case 1, because subcarriers of the distributed 242-tone RU and subcarriers of the continuous 242-tone RU overlap, these overlapped subcarriers are allocated to two users. As a result, a collision occurs. In the case 2, a part of subcarriers of the distributed 242-tone RU fall on the 20 MHz punctured channel. As a result, a collision occurs.

When the resource unit allocated to the station collides with the another resource unit or channel, the resource unit allocated to the station cannot perform normal data transmission. This affects normal communication between stations.

In view of this, this application provides a resource configuration method and a communication apparatus. A first station can indicate a first resource unit to a second station, and the first resource unit includes a subcarrier in a difference set between a subcarrier set of a second resource unit and a subcarrier set of a first frequency range, that is, the first resource unit does not include a subcarrier of a first frequency range. A part of subcarriers of the second resource unit are located in the first frequency range, and therefore such a manner can avoid an intersection set between the indicated first resource unit and the subcarrier of the first frequency range, that is, avoid a resource collision, and maintain normal communication between stations.

FIG. 7 is a schematic flowchart of a resource configuration method 200 according to an embodiment of this application.

S210: A first station generates first information, where the first information indicates a first resource unit.

The first station may be an AP, or may be a non-AP STA. For a description of the first station, refer to the description of the station in FIG. 1. Details are not described herein again.

The first resource unit includes a subcarrier in a difference set between a subcarrier set of a second resource unit and a subcarrier set of a first frequency range. In other words, the first resource unit does not include a subcarrier in an intersection set between the subcarrier set of the second resource unit and the subcarrier set of the first frequency range.

It is assumed that A and B are two sets. The term "different set" in this specification represents a set including all elements that belong to the set A but do not belong to the set B; and the term "intersection set" in this specification represents a set including all elements that belong to the set A and that belong to the set B. The subcarrier in the difference set between the subcarrier set of the second resource unit and the subcarrier set of the first frequency range is a subcarrier that belongs to the subcarrier set of the second resource unit but does not belong to the subcarrier set of the first frequency range.

A part of subcarriers of the second resource unit are located in the first frequency range. In other words, there is the intersection set between the subcarrier set of the second resource unit and the subcarrier set of the first frequency range.

The first frequency range may be understood as a frequency range of a punctured subcarrier, or a location occupied by a punctured subcarrier.

Optionally, the first information indicates a first resource unit. In other words, the first information indicates that a part of subcarriers of the second resource unit that are located in the first frequency range are unavailable, or the first information indicates that the subcarrier in the intersection set between the subcarrier set of the second resource unit and the subcarrier set of the first frequency range is unavailable.

In this application, the "subcarrier set" represents one or more subcarriers in frequency domain, and each subcarrier is an element of the subcarrier set. For example, the subcarrier set of the second resource unit refers to all subcarriers of the second resource unit. For example, the subcarrier set of the first frequency range refers to all subcarriers in the first frequency range.

For example, a distributed RU #1 (an example of the second resource unit) includes subcarriers 1, 5, 9, 13, 17, and 21, in other words, a subcarrier set of the distributed RU #1 includes subcarriers 1, 5, 9, 13, 17, and 21. Similarly, the first frequency range includes subcarriers 1, 2, 3, 4, 5, and 6, in other words, a subcarrier set of the first frequency range includes subcarriers 1, 2, 3, 4, 5, and 6. For example, if the subcarrier set of the second resource unit includes the subcarriers 1, 5, 9, 13, 17, and 21, and the subcarrier set of the first frequency range includes the subcarriers 1, 2, 3, 4, 5, and 6, the intersection set between the subcarrier set of the second resource unit and the subcarrier set of the first frequency range includes the subcarriers 1 and 5, and the difference set between the subcarrier set of the second resource unit and the subcarrier set of the first frequency range includes the subcarriers 9, 13, 17, and 21. That is, in this example, the first resource unit may include the subcarriers 9, 13, 17, and 21, but does not include the subcarriers 1 and 5.

It should be understood that after the subcarriers are sorted in ascending order of frequencies, each subcarrier has a corresponding location in frequency domain. In an example, indexes (or referred to as sequence numbers) of subcarriers in this application are sequence numbers of the subcarriers in frequency domain after the subcarriers are sorted in ascending order of the frequencies. A larger number represents that the subcarrier is located at a higher frequency in frequency domain. Optionally, there may be another correspondence between a subcarrier sequence number and a frequency domain location. This is not limited in this application. For example, a subcarrier at a middle location in frequency domain is used as a subcarrier 0, subcarriers on the left side of the subcarrier 0 are sorted in ascending order by using negative sequence numbers, and subcarriers on the left side of the subcarrier 0 are sorted in ascending order by using positive sequence numbers. For example, an RU includes subcarriers -2, -1, 0, 1, 2, and 3.

It should be further understood that the subcarriers with the indexes of the subcarriers may include one or more of a pilot subcarrier, a data subcarrier, a null subcarrier, a direct current subcarrier, and the like.

In addition, in this application, an example in which the RU includes six subcarriers is used for description. In actual application, a quantity of subcarriers included in the RU may be 26, 52, 106, 242, or the like. This is not limited. The RU may also be an MRU.

Optionally, in this application, at least one of the first resource unit, the second resource unit, and a third resource unit (refer to the following) is a distributed MRU, and at least one of a first continuous resource unit (refer to the following) and a second continuous resource unit (refer to the following) is a continuous MRU. In other words, one or more of the RUs provided in this application are MRUs.

Optionally, the second resource unit in this application is a distributed resource unit. Therefore, the first resource unit is also a distributed resource unit.

It should be understood that "the second resource unit is a distributed resource unit" may be understood as follows: The second resource unit is a distributed MRU, or the second resource unit may be a distributed resource unit including a plurality of distributed resource units. Therefore, the first resource unit may also be a distributed MRU.

S220: The first station sends the first information to a second station, and correspondingly, the second station receives the first information.

The second station may be an AP, or may be a non-AP STA. For a description of the second station, refer to the description of the station in FIG. 1. Details are not described herein again.

Optionally, when the first station is an access point and the second station is a non-AP STA, the first station may add the first information to a trigger frame when sending the trigger frame to the second station.

Optionally, when sending a physical layer protocol data unit (physical protocol data unit, PPDU) to the second station, the first station may add the first information to the PPDU.

Based on the foregoing solution, the first station can indicate the first resource unit to the second station, and the first resource unit includes the subcarrier in the difference set between the subcarrier set of the second resource unit and the subcarrier set of the first frequency range, that is, the first resource unit does not include a subcarrier of the first frequency range. The part of subcarriers of the second resource unit are located in the first frequency range, and therefore such a manner can avoid an intersection set between the indicated first resource unit and the subcarrier of the first frequency range, that is, avoid a resource collision, and maintain normal communication between stations.

In an implementation, the first frequency range includes a frequency range occupied by a punctured (punctured) channel.

For example, due to channel puncture, a subcarrier in the punctured channel cannot perform data transmission, and the first frequency range may be the frequency range occupied by the punctured channel.

It should be understood that the first frequency range includes a frequency range occupied by a punctured channel may be understood that a frequency range indicated by the first frequency range may be greater than or equal to the frequency range occupied by the punctured channel.

In another implementation, the first frequency range includes a frequency range occupied by one or more continuous resource units.

For example, because there is the one or more continuous resource units, and subcarriers in the one or more continuous resource units have been allocated, the first frequency range may include the frequency range occupied by the one or more continuous resource units. In other words, the first frequency range includes a frequency range occupied by a continuous MRU.

It should be understood that the first frequency range includes a frequency range occupied by one or more continuous resource units may be understood that the first frequency range may be greater than or equal to the frequency range occupied by the one or more continuous resource units.

In another implementation, the first frequency range includes a frequency range occupied by a subcarrier at a specified location.

For example, to enable the first resource unit to have a small quantity of subcarriers, the subcarrier at the specified location is punctured. In this case, the first frequency range may include the frequency range occupied by the subcarrier at the specified location. For another example, in a range of 320 MHz, one 20 MHz bandwidth is punctured. If 4 bits represent puncture of 320 MHz, 1 bit represents puncture of 80 MHz. In this case, 80 MHz may be understood as a specified frequency range.

For example, the first frequency range may be a range corresponding to any one of a 26-tone RU, a 52-tone RU, a 106-tone RU, 20 MHz (or a 242-tone RU), 40 MHz (or a 484-tone RU), 80 MHz (or a 996-tone RU), and 160 MHz (or a 2*996-tone RU).

It should be understood that the "frequency range" in this application is a frequency range in a WLAN protocol, and a subcarrier is used as a minimum granularity of the frequency range. A plurality of subcarriers may form one RU or MRU in a WLAN.

Optionally, the first frequency range may include a segment of continuous subcarriers. For example, the first frequency range includes subcarriers 1, 2, 3, 4, 5, and 6 in frequency domain.

Optionally, the first frequency range may include a plurality of discontinuous subcarriers. For example, the first frequency range includes subcarriers 1, 2, 3, 4, 5, 6, and 9 in frequency domain.

Optionally, the method 200 further includes: S230: The second station transmits data on the first resource unit.

Specifically, because the part of subcarriers of the second resource unit are located in the first frequency range, in other words, because there is the intersection set between the subcarrier set of the second resource unit and the subcarrier set of the first frequency range, that the second station transmits data on the first resource unit may be understood as follows: No data is sent on the part of subcarriers of the second resource unit that are located in the first frequency range; or no data is sent on the subcarriers in the intersection set between the subcarrier set of the second resource unit and the subcarrier set of the first frequency range; or the second station does not use the part of subcarriers of the second resource unit that are in the first frequency range to send data; or the second station does not use the subcarriers in the intersection set of the subcarrier set of the second resource unit and the subcarrier set of the first frequency range to send data.

In an embodiment, a subcarrier of the first resource unit includes the subcarrier in the difference set between the subcarrier set of the second resource unit and the subcarrier set of the first frequency range.

In this embodiment, the subcarriers in the intersection set are punctured on the second resource unit, and the remaining subcarrier is the first resource unit.

Optionally, in this embodiment, the second resource unit may be referred to as an unpunctured distributed resource unit. Relatively, the first resource unit may be referred to as a punctured distributed resource unit.

For example, "punctured" in the term "punctured distributed resource unit" refers to a punctured subcarrier instead of a punctured channel. The punctured subcarrier indicates that the subcarrier does not belong to the first resource unit.

The following describes a relationship between the first resource unit, the second resource unit, and the first frequency range in this embodiment.

It is assumed that a quantity of subcarriers of an unpunctured distributed resource unit (an example of the second resource unit) is x, where a quantity of data subcarriers is *x_{D}*, and a quantity of pilot subcarriers is *x_{P}*, and indexes of the subcarriers of the unpunctured distributed resource unit at absolute locations in frequency may be represented as *y*(1), *..., y*(2)*,* ..., and*y*(x).

A punctured distributed resource unit (an example of the first resource unit) means that no data is sent on a part of subcarriers in a subcarrier set of the unpunctured distributed resource unit. In other words, a punctured distributed resource unit includes only a part of subcarriers of the unpunctured distributed resource unit, and a quantity of elements in a subcarrier set corresponding to the punctured distributed resource unit is reduced. The reduced subcarriers or the subcarriers on which the data is not sent may be any one of the following:
(1) subcarriers allocated to a continuous resource unit;
(2) subcarriers belonging to a punctured channel range; and
(3) subcarriers at specified locations.

Therefore, if a quantity of reduced subcarriers or subcarriers on which the data is not sent is *x*₁, a quantity of subcarriers of the punctured distributed resource unit is *x* - *x*₁*,* and locations of the *x - x*₁ subcarriers in frequency domain do not change compared with those in the unpunctured distributed resource unit.

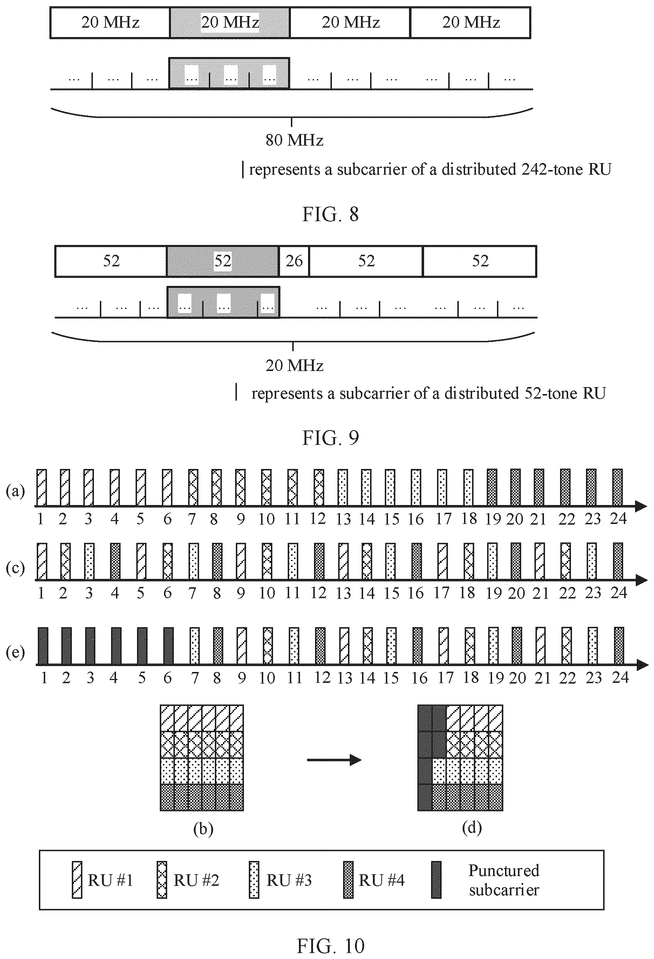

The first resource unit in this embodiment is described below by using examples with reference to FIG. 8 to FIG. 10.

FIG. 8 is a diagram of a tone plan according to this embodiment of this application. As shown in FIG. 8, the second resource unit is a distributed 242-tone RU that is distributed on 80 MHz. In the distributed 242-tone RU, N₁ subcarriers are distributed on a first 20 MHz bandwidth, and are denoted as subcarriers 1, 2, 3, ..., and N₁; N₂ subcarriers are distributed on a second 20 MHz bandwidth, and are denoted as subcarriers N₁+1, Ni+2, N₁+3, ..., and N₁+N₂; N₃ subcarriers are distributed on a third 20 MHz bandwidth, and are denoted as subcarriers N₁+N₂+1, N₁+N₂+2, N₁+N₂+3, ..., and N₁+N₂+N₃; and N₄ subcarriers are distributed on a fourth 20 MHz bandwidth, and are denoted as subcarriers N₁+N₂+N₃+1, N₁+N₂+N₃+2, N₁+N₂+N₃+3, ..., and N₁+N₂+N₃+N₄, where N₁+N₂+N₃+N₄=242. Optionally, none of N₁, N₂, N₃, and N₄ is equal, or at least two of N₁, N₂, N₃, and N₄ are equal. The first frequency range is the second 20 MHz on the 80 MHz. For example, the second 20 MHz is punctured, or the continuous 242-tone RU is allocated to the second 20 MHz. In this case, data is not sent on the subcarriers N₁+1, N₁+2, N₁+3, ..., and N₁+N₂ of the distributed 242-tone RU. Specifically, the subcarriers in the difference set between the subcarrier set of the second resource unit and the subcarrier set of the first frequency range are subcarriers of the second resource unit that are distributed on the first 20 MHz, the third 20 MHz, and the fourth 20 MHz, that is, the subcarriers of the first resource unit are the subcarriers 1, 2, 3, ..., and Ni, N₁+N₂+1, N₁+N₂+2, N₁+N₂+3, ..., and N₁+N₂+N₃, N₁+N₂+N₃+1, N₁+N₂+N₃+2, N₁+N₂+N₃+3, ..., and N₁+N₂+N₃+N₄ of the distributed 242-tone RU.

It should be understood that the distributed 242-tone RU has a plurality of tone plan manners on the 80 MHz. This is not limited in this application.

FIG. 9 is another diagram of a tone plan according to this embodiment of this application. As shown in FIG. 9, the second resource unit is a distributed 52-tone RU that is distributed on 20 MHz. 13 subcarriers are distributed on the 52-tone RU, and are denoted as subcarriers 1 to 13; 13 subcarriers are distributed on a second 52-tone RU, and are denoted as subcarriers 14 to 26; 13 subcarriers are distributed on a third 52-tone RU, and are denoted as subcarriers 27 to 39; and 13 subcarriers are distributed on a fourth 52-tone RU, and are denoted as subcarriers 40 to 52. The first frequency range is the second 52-tone RU on the 20 MHz. For example, the second 52-tone RU is an allocated continuous RU. In this case, data is not sent on the subcarriers 14 to 26 of the distributed 52-tone RU. Specifically, the subcarriers in the difference set between the subcarrier set of the second resource unit and the subcarrier set of the first frequency range are subcarriers of the second resource unit that are distributed on the first 52-tone RU, the third 52-tone RU, and the fourth 52-tone RU, that is, the subcarriers of the first resource unit are the subcarriers 1 to 13, 27 to 39, and 40 to 52 of the distributed 242-tone RU.

It should be understood that the distributed 52-tone RU has a plurality of tone plan manners on the 20 MHz. The foregoing description in FIG. 9 is merely an example, and is not intended to limit this application.

FIG. 10 is another diagram of a tone plan according to this embodiment of this application. The foregoing embodiment is described in FIG. 10 by using an example with reference to a mapping manner of an interleaver. In (a), (c), and (e) in FIG. 10, a horizontal coordinate represents a frequency or subcarrier sorting order.

As shown in (a) in FIG. 10, it is assumed that there are four continuous RUs in total, each continuous RU includes 6 subcarriers, and distribution of the continuous RUs in frequency domain is shown in (a) in FIG. 10. Subcarriers 1 to 6 form a continuous RU #1, subcarriers 7 to 12 form a continuous RU #2, subcarriers 13 to 18 form a continuous RU #3, and subcarriers 19 to 24 form a continuous RU #4.

(b) in FIG. 10 shows a process of implementing distributed RUs by using an idea of a row-in column-out interleaver. 4 distributed RUs may be output after the 4-row row-in column-out interleaver is used. As shown in (c) in FIG. 10, a distributed RU #1 includes subcarriers 1, 5, 9, 13, 17, and 21, a distributed RU #2 includes subcarriers 2, 6, 10, 14, 18, and 22, a distributed RU #3 includes subcarriers 3, 7, 11, 15, 19, and 23, and a distributed RU #4 includes subcarriers 4, 8, 12, 16, 20, and 24. In addition, the four distributed RUs correspond to the four continuous RUs shown in (a) in FIG. 10. The distributed RU #1, the distributed RU #2, the distributed RU #3, and the distributed RU #4 shown in (c) in FIG. 10 each are an example of the second resource unit.

If a frequency range (an example of the first frequency range) in which 6 lowest-frequency subcarriers are located is punctured or occupied by a continuous RU (an example of the first continuous resource unit), the subcarrier set of the first frequency range includes the subcarriers 1, 2, 3, 4, 5, and 6. (d) in FIG. 10 shows a process of implementing punctured distributed RUs by using an idea of a row-in column-out interleaver. Distribution of 4 punctured distributed RUs output in frequency domain after the 4-row row-in column-out interleaver is used is shown in (e) in FIG. 10. A punctured distributed RU #1 indicated by the first station includes subcarriers 9, 13, 17, and 21, a punctured distributed RU #2 includes subcarriers 10, 14, 18, and 22, a punctured distributed RU #3 includes subcarriers 7, 11, 15, 19, and 23, and a punctured distributed RU #4 includes subcarriers 8, 12, 16, 20, and 24. The punctured distributed RU #1 shown in (e) in FIG. 10 is a difference set between the distributed RU #1 and the first frequency range, the punctured distributed RU #2 is a difference set between the distributed RU #2 and the first frequency range, the punctured distributed RU #3 is a difference set between the distributed RU #3 and the first frequency range, and the punctured distributed RU #4 is a difference set between the distributed RU #4 and the first frequency range. The punctured distributed RU #1, the punctured distributed RU #2, the punctured distributed RU #3, and the punctured distributed RU #4 each are an example of the first resource unit.

Based on the solution in the foregoing embodiment, the first station may indicate the punctured distributed resource unit to the second station. This can avoid an intersection set between the indicated resource unit and the subcarrier of the first frequency range, that is, avoid a resource collision, and maintain normal communication between stations.

In another embodiment, the first resource unit includes not only the subcarrier in the difference set between the subcarrier set of the second resource unit and the subcarrier set of the first frequency range, but also a subcarrier in a first subcarrier set.

It should be understood that, in this embodiment, the first resource unit may be referred to as a distributed resource unit whose size is supplemented, a punctured distributed resource unit whose size is supplemented, or a punctured resource unit whose subcarrier is supplemented. The distributed resource unit whose size is supplemented includes a subcarrier of the punctured distributed resource unit and the subcarrier in the first subcarrier set. The "size supplement" indicates that a quantity of subcarriers of a resource unit whose size is supplemented is the same as or close to a quantity of subcarriers of an unpunctured distributed resource unit, and does not necessarily indicate that the two quantities are the same. Optionally, the quantity of subcarriers of the resource unit whose size is supplemented may be greater than the quantity of subcarriers of the unpunctured distributed resource unit.

A quantity of subcarriers of the first subcarrier set is less than or equal to a quantity of subcarriers in the intersection set between the subcarrier set of the second resource unit and the subcarrier set of the first frequency range. In other words, a quantity of subcarriers of the first subcarrier set is less than or equal to a quantity of punctured subcarriers of the second resource unit.

Specifically, the subcarriers in the intersection set between the subcarrier set of the second resource unit and the subcarrier set of the first frequency range are punctured subcarriers. After the subcarriers in the intersection set are punctured, subcarriers of a second subcarrier set may be selected as supplementary subcarriers of the first resource unit, and the selected subcarriers form the first subcarrier set. In other words, the first subcarrier set may be a subset of a second subcarrier set.

The second subcarrier set is a difference set between a subcarrier set of the third resource unit and the subcarrier set of the first frequency range. The second subcarrier set may be understood as a set formed by subcarriers that can be used as supplementary subcarriers.

The third resource unit may be any resource unit. For example, the third resource unit is one or more continuous resource units. For another example, the third resource unit is one or more distributed resource units. For another example, the third resource unit is an MRU, where the MRU may be a continuous MRU, or may be a distributed MRU. There is no intersection set between the subcarrier set of the third resource unit and the subcarrier set of the second resource unit. Therefore, some or all subcarriers of the third resource unit may be used as the second subcarrier set. The some or all subcarriers of the third resource unit refer to subcarriers in the difference set between the subcarrier set of the third resource unit and the subcarrier set of the first frequency range. It should be understood that the difference set herein may be equal to the subcarrier set of the third resource unit.

In an example, the third resource unit is a distributed resource unit specified by the first station.

In another example, the third resource unit is a distributed resource unit corresponding to the first continuous resource unit, and a frequency range occupied by the first continuous resource unit is the first frequency range.

Specifically, it is assumed that the first frequency range is the frequency range occupied by the first continuous resource unit, and the third resource unit is the distributed resource unit corresponding to the first continuous resource unit, the second subcarrier set may include a part of subcarriers of the third resource unit. For example, the second subcarrier set may be the difference set between the subcarrier set of the third resource unit and the subcarrier set of the first frequency range. In other words, the second subcarrier set includes a subcarrier other than subcarriers of the first frequency range in the third resource unit. In addition, the subcarriers of the first subcarrier set may occupy locations of the second subcarrier set in frequency domain.

It should be understood that, in this application, the remaining subcarrier other than the subcarriers of the first frequency range in the third resource unit is used as a supplementary subcarrier of another resource unit. The third resource unit may be understood as a "sacrifice" resource unit, and is used to supplement a size of another resource unit.

Further, for a location order of the subcarriers in the first subcarrier set in the second subcarrier set, refer to a location order of the subcarriers of the second resource unit in a third subcarrier set. The third subcarrier set is the difference set between the subcarrier set of the first frequency range and the subcarrier set of the third resource unit. Specifically, the third subcarrier set may be understood as a subcarrier set that needs to be supplemented or a punctured subcarrier set, and includes a part of subcarriers in the first frequency range in frequency domain. The part of subcarriers are the remaining subcarriers in the first frequency range except subcarriers occupied by the third resource unit.

In an implementation, the location order of the subcarriers in the first subcarrier set in the second subcarrier set may be the same as the location order of the subcarriers of the second resource unit in the third subcarrier set. In other words, after the subcarriers are sorted in ascending order of frequencies, if a subcarrier of the second resource unit is an i^{th} subcarrier in the third subcarrier set, a subcarrier in the first subcarrier set is also an i^{th} subcarrier in the second subcarrier set, where i is a positive integer.

It should be understood that, in this application, the location order of the subcarriers of the second resource unit in the third subcarrier set is sequence numbers of the subcarriers of the second resource unit after a plurality of subcarriers in the third subcarrier set are arranged in ascending order of frequencies. Similarly, the location order of the subcarriers in the first subcarrier set in the second subcarrier set is sequence numbers of the subcarriers in the first subcarrier set after a plurality of subcarriers in the second subcarrier set are arranged in ascending order of frequencies.

Optionally, the method 200 further includes: The first station sends third information to the second station, where the third information indicates whether the first resource unit includes the subcarrier in the first subcarrier set.

Specifically, the third information may be 1 bit. If the third information indicates that the first resource unit includes the subcarrier in the first subcarrier set, the first resource unit is a distributed resource unit whose size is supplemented; or if the third information indicates that the first resource unit does not include the subcarrier in the first subcarrier set, the first resource unit is a punctured distributed resource unit.

In this application, the third information may alternatively be understood as indicating that the first resource unit is the punctured distributed resource unit or the distributed resource unit whose size is supplemented.

In an example, the first station may send the third information in a process of sending the first information to the second station, that is, the third information and the first information are carried in a same frame. In this case, S220 may be understood as that the first station sends the first information and the third information to the second station, and correspondingly, the second station receives the first information and the third information.

In another example, the first station may alternatively send the third information and the first information separately, that is, a sending occasion of the third information may be before S220, or after S220. If the sending occasion of the third information is before S220, the sending occasion of the third information may be before S210, or may be after S210. This is not limited in this application. Optionally, if the first station sends the third information and the first information separately, the third information may be sent to the second station before S230.

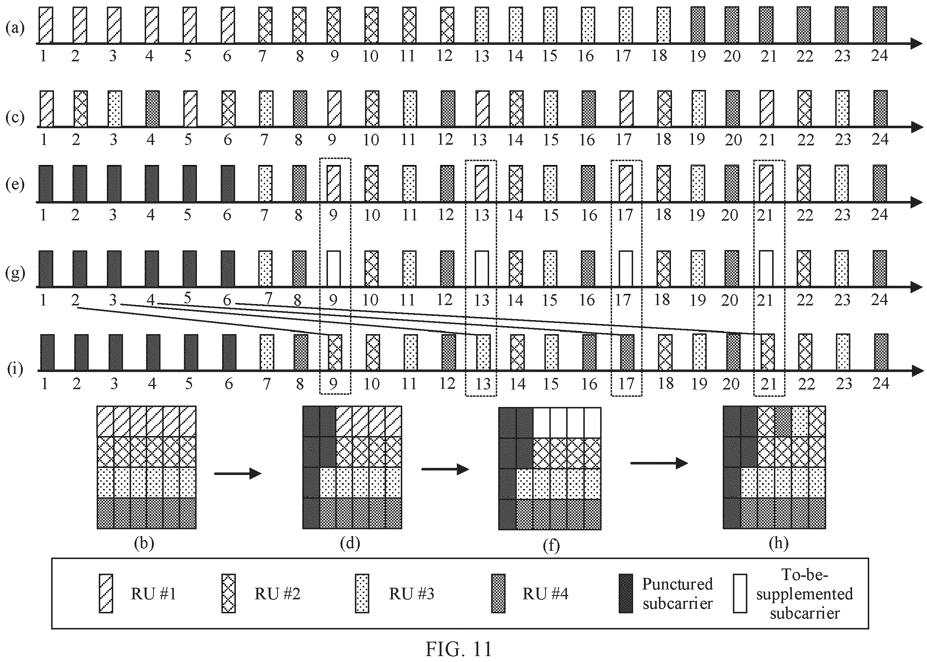

The first resource unit in this embodiment is described below by using examples with reference to FIG. 11 to FIG. 14.

FIG. 11 is another diagram of a tone plan according to an embodiment of this application. In (a), (c), (e), (g), and (i) in FIG. 11, a horizontal coordinate represents a frequency or subcarrier sorting order.

As shown in (a) in FIG. 11, it is assumed that there are four continuous RUs in total, each continuous RU includes 6 subcarriers, and distribution of the continuous RUs in frequency domain is shown in (a) in FIG. 11. Subcarriers 1 to 6 form a continuous RU #1, subcarriers 7 to 12 form a continuous RU #2, subcarriers 13 to 18 form a continuous RU #3, and subcarriers 19 to 24 form a continuous RU #4.

(b) in FIG. 11 shows a process of implementing distributed RUs by using an idea of a row-in column-out interleaver. 4 distributed RUs may be output after the interleaver is used. As shown in (c) in FIG. 11, a distributed RU #1 indicated by the first station includes subcarriers 1, 5, 9, 13, 17, and 21, a distributed RU #2 includes subcarriers 2, 6, 10, 14, 18, and 22, a distributed RU #3 includes subcarriers 3, 7, 11, 15, 19, and 23, and a distributed RU #4 includes subcarriers 4, 8, 12, 16, 20, and 24. In addition, the four distributed RUs correspond to the four continuous RUs shown in (a) in FIG. 11. The distributed RU #1, the distributed RU #2, the distributed RU #3, and the distributed RU #4 shown in (c) in FIG. 11 each are an example of the second resource unit.

If a frequency range in which 6 lowest-frequency subcarriers are located is occupied by a continuous RU (an example of the first continuous resource unit, also an example of the first frequency range), the continuous RU includes the subcarriers 1, 2, 3, 4, 5, and 6. (d) in FIG. 11 shows a process of implementing punctured distributed RUs by using an idea of a row-in column-out interleaver. Distribution of 4 punctured distributed RUs output in frequency domain after the 4-row row-in column-out interleaver is used is shown in (e) in FIG. 11. A punctured distributed RU #1 indicated by the first station includes subcarriers 9, 13, 17, and 21, a punctured distributed RU #2 includes subcarriers 10, 14, 18, and 22, a punctured distributed RU #3 includes subcarriers 7, 11, 15, 19, and 23, and a punctured distributed RU #4 includes subcarriers 8, 12, 16, 20, and 24. The punctured distributed RU #1 shown in (e) in FIG. 11 is a difference set between the distributed RU #1 and the first frequency range, the punctured distributed RU #2 is a difference set between the distributed RU #2 and the first frequency range, the punctured distributed RU #3 is a difference set between the distributed RU #3 and the first frequency range, and the punctured distributed RU #4 is a difference set between the distributed RU #4 and the first frequency range. The subcarriers of the punctured distributed RU #1, the subcarriers of the punctured distributed RU #2, the subcarriers of the punctured distributed RU #3, and the subcarriers of the punctured distributed RU #4 are a part of the first resource unit.

It can be learned from comparison between (a) in FIG. 11 and (c) in FIG. 11 that, the punctured distributed RU #1 has two subcarriers less than the unpunctured distributed RU #1, the punctured distributed RU #2 has two subcarriers less than the unpunctured distributed RU #2, the punctured distributed RU #3 has one subcarrier less than the unpunctured distributed RU #3, and the punctured distributed RU #4 has one subcarrier less than the unpunctured distributed RU #4. Therefore, the first station may use the subcarriers in any one of the punctured distributed RU #1, the punctured distributed RU #2, the punctured distributed RU #3, and the punctured distributed RU #4 as supplementary subcarriers, and indicate a part of subcarriers in the supplementary subcarriers to the second station. Therefore, subcarriers are supplemented in the other three punctured distributed RUs, so that sizes are the same as those of the unpunctured distributed RUs as much as possible.

Specifically, the punctured distributed RU #1 needs to supplement two subcarriers; the punctured distributed RU #2 needs to supplement two subcarriers; the punctured distributed RU #3 needs to supplement one subcarrier; and the punctured distributed RU #4 needs to supplement one subcarrier. It may be understood that, for any punctured distributed RU, a quantity of subcarriers (that is, the first subcarrier set) that need to be supplemented is less than or equal to a quantity of punctured subcarriers (namely, an intersection set between an unpunctured distributed RU and a continuous RU in the first frequency range).

The following describes a method for supplementing a subcarrier.

A distributed resource unit (namely, the third resource unit) corresponding to the continuous RU in the first frequency range includes subcarriers 1, 5, 9, 13, 17, and 21, that is, the third resource unit is the unpunctured distributed RU #1. Therefore, the difference set between the subcarrier set of the third resource unit and the subcarrier set of the first frequency range is subcarriers 9, 13, 17, and 21 (an example of the second subcarrier set). In this embodiment, the subcarriers in the second subcarrier set may be used as supplementary subcarriers. (f) in FIG. 11 shows a process of implementing supplementary subcarriers by using an idea of a row-in column-out interleaver, where the 4-row row-in column-out interleaver is used. Distribution, in frequency domain, of three punctured distributed RUs and supplementary subcarriers that are output by the interleaver is shown in (g) in FIG. 11. It can be learned from the figure that the supplementary subcarriers include the subcarriers 9, 13, 17, and 21.

Further, the supplementary subcarriers may be separately supplemented to the punctured distributed RU #2, the punctured distributed RU #3, and the punctured distributed RU #4, to form the distributed RU #2 whose size is supplemented, the distributed RU #3 whose size is supplemented, and the distributed RU #4 whose size is supplemented. Specifically, for a distributed RU #x, a subcarrier that needs to be supplemented may be selected from the supplementary subcarriers. A selection manner is as follows: After the subcarriers are sorted in ascending order of frequencies, in the remaining subcarriers (namely, the third subcarrier set) other than the subcarriers occupied by the third resource unit in the first frequency range, if a subcarrier belonging to the unpunctured distributed RU #x is an i^{th} subcarrier, the subcarrier that needs to be supplemented is the i^{th} subcarrier in the ascending order of the frequencies in the supplementary subcarriers.

Specifically, as shown in (g) in FIG. 11, the remaining subcarriers other than the subcarriers occupied by the third resource unit in the first frequency range are subcarriers 2, 3, 4, and 6 (an example of the third subcarrier set). For the punctured distributed RU #2, the subcarriers originally belonging to the unpunctured distributed RU #2 are a first subcarrier and a fourth subcarrier (namely, the subcarrier 2 and the subcarrier 6) in the subcarriers 2, 3, 4, and 6. For the punctured distributed RU #3, the subcarrier originally belonging to the unpunctured distributed RU #3 is a second subcarrier (namely, the subcarrier 3) in the subcarriers 2, 3, 4, and 6. For the punctured distributed RU #4, the subcarrier originally belonging to the unpunctured distributed RU #4 is a third subcarrier (namely, the subcarrier 4) in the subcarriers 2, 3, 4, and 6. In this case, the first station may supplement the first subcarrier and the fourth subcarrier (namely, the subcarrier 9 and the subcarrier 21) in the subcarriers 9, 13, 17, and 21 to the punctured distributed RU #2, to form the distributed RU #2 whose size is supplemented, supplement the second subcarrier (namely, the subcarrier 13) in the subcarriers 9, 13, 17, and 21 to the punctured distributed RU #3, to form the distributed RU #3 whose size is supplemented, and supplement the third subcarrier (namely, the subcarrier 17) in the subcarriers 9, 13, 17, and 21 to the punctured distributed RU #3, so as to form a distributed RU #3 whose size is supplemented. (h) in FIG. 11 shows a process of supplementing sizes of distributed RUs by using an idea of a row-in column-out interleaver. After the 4-row row-in column-out interleaver is used, distribution, in frequency domain, of the three output distributed RUs whose sizes are supplemented is shown in (i) in FIG. 11. It can be learned from the figure that the distributed RU #2 whose size is supplemented and that is indicated by the first station includes subcarriers 9, 10, 14, 18, 21, and 22, the distributed RU #3 whose size is supplemented includes subcarriers 7, 11, 13, 15, 19, and 23, and the distributed RU #4 whose size is supplemented includes subcarriers 8, 12, 16, 17, 20, and 24. In (i) in FIG. 11, the distributed RU #2 whose size is supplemented, the distributed RU #3 whose size is supplemented, and the distributed RU #4 whose size is supplemented each are an example of the first resource unit. Further, if the first resource unit is the distributed RU #2 whose size is supplemented, a set including the subcarriers 9 and 21 is an example of the first subcarrier set. If the first resource unit is the distributed RU #3 whose size is supplemented, a set including the subcarrier 13 is an example of the first subcarrier set. If the first resource unit is the distributed RU #4 whose size is supplemented, a set including the subcarrier 17 is an example of the first subcarrier set.

It should be understood that the supplementary manner in this application may be predefined in a standard or may be indicated by the first station to the second station. The foregoing supplementary method is merely an example. This is not limited in embodiments of this application.

Based on the solution in the foregoing embodiment, the first station may indicate, to the second station, the distributed resource unit whose size is supplemented. This can avoid an intersection set between the indicated resource unit and the subcarrier of the first frequency range, that is, avoid a resource collision, and maintain normal communication between stations.

It should be further understood that, in the example in FIG. 11, the first frequency range is exactly totally occupied by the first continuous RU, that is, a quantity of subcarriers in the first frequency range is equal to a quantity of subcarriers of the third resource unit, so that a quantity of subcarriers in the second subcarrier set is the same as a quantity of subcarriers in the third subcarrier set. Therefore, a quantity of subcarriers of the distributed RU #2 whose size is supplemented, a quantity of subcarriers of the distributed RU #3 whose size is supplemented, and a quantity of subcarriers of the distributed RU #4 whose size is supplemented are respectively the same as a quantity of subcarriers of the unpunctured distributed RU #2, a quantity of subcarriers of the unpunctured distributed RU #3, and a quantity of subcarriers of the unpunctured distributed RU #4. In other words, a quantity of subcarriers of the punctured distributed RU #2, a quantity of subcarriers of the punctured distributed RU #3, and a quantity of subcarriers of the punctured distributed RU #4 may all be supplemented.

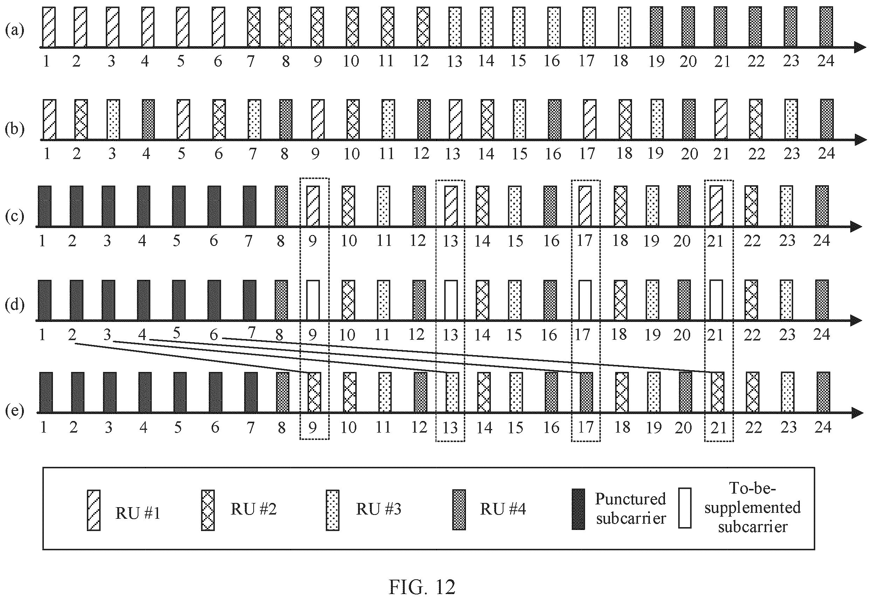

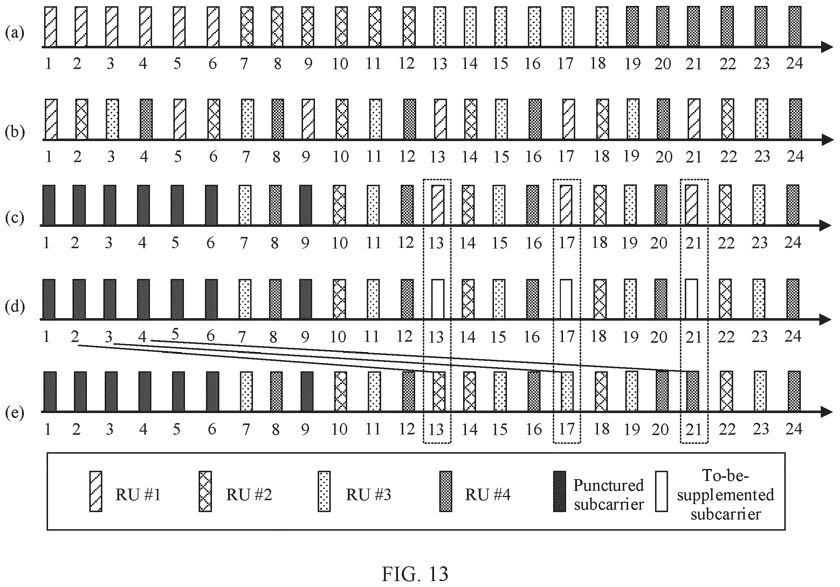

In another example, a quantity of subcarriers in the first frequency range is greater than a quantity of subcarriers of the third resource unit, so that a quantity of subcarriers in the second subcarrier set is less than a quantity of subcarriers in the third subcarrier set. For example, the third resource unit is a distributed resource unit specified by the first station, the first frequency range is a frequency range occupied by a punctured channel, and the quantity of subcarriers in the first frequency range is greater than the quantity of subcarriers of the third resource unit. In this case, subcarriers of a distributed RU that is partially punctured in frequency domain cannot be supplemented to a size that is the same as that of an unpunctured distributed RU. In this case, the supplementary manner in FIG. 11 may still be used. Only one or more subcarriers that have high frequencies and that need to be supplemented cannot be supplemented, that is, corresponding resources cannot be found for one or more occupied subcarriers with high frequencies. Descriptions are provided below by using examples with reference to FIG. 12 and FIG. 13.

For example, FIG. 12 is another diagram of a tone plan according to this embodiment of this application. In (a), (b), (c), (d), and (e) in FIG. 12, a horizontal coordinate represents a frequency or subcarrier sorting order.

For (a) and (b) in FIG. 12, refer to (a) and (c) in FIG. 11 respectively. Details are not described herein again.

As shown in (c) in FIG. 12, it is assumed that punctured subcarriers are 7 continuous subcarriers, and occupy the subcarriers 1, 2, 3, 4, 5, 6, and 7 (another example of the first frequency range). The third resource unit is the same as that in the example in FIG. 11, and is still the unpunctured distributed RU #1, that is, includes the subcarriers 1, 5, 9, 13, 17, and 21. In this case, there are still 4 subcarriers, namely, the subcarriers 9, 13, 17, and 21, in the second subcarrier set. Different from that in the example in FIG. 11, there are 5 subcarriers, namely, subcarriers 2, 3, 4, 6, and 7, in the third subcarrier set, as shown in (d) in FIG. 12. Therefore, a punctured distributed RU #3 indicated by the first station includes subcarriers 11, 15, 19, and 23, and a distributed RU #3 whose size is supplemented includes subcarriers 11, 13, 15, 19, and 23, as shown in (e) in FIG. 12. In other words, a punctured distributed RU #3 is not totally supplemented.

For another example, FIG. 13 is another diagram of a tone plan according to this embodiment of this application. In (a), (b), (c), (d), and (e) in FIG. 13, a horizontal coordinate represents a frequency or subcarrier sorting order.

For (a) and (b) in FIG. 13, refer to (a) and (c) in FIG. 11 respectively. Details are not described herein again.

As shown in (c) in FIG. 13, it is assumed that punctured subcarriers are 7 subcarriers, and occupy the subcarriers 1, 2, 3, 4, 5, 6, and 9 (another example of the first frequency range). The third resource unit is the same as that in the example in FIG. 11, and is still the unpunctured distributed RU #1, that is, includes the subcarriers 1, 5, 9, 13, 17, and 21. In this case, there are still 4 subcarriers, namely, the subcarriers 2, 3, 4, and 6, in the third subcarrier set. Different from that in the example in FIG. 11, there are 3 subcarriers, namely, subcarriers 13, 17, and 21, in the second subcarrier set, as shown in (d) in FIG. 13. Therefore, a distributed RU #2 whose size is supplemented and that is indicated by the first station includes subcarriers 10, 13, 14, 18, and 22, a distributed RU #3 whose size is supplemented includes subcarriers 7, 11, 15, 17, 19, and 23, and the distributed RU #4 whose size is supplemented includes subcarriers 8, 12, 16, 20, 21, and 24, as shown in (e) in FIG. 13. In other words, a punctured distributed RU #2 is not totally supplemented.

It should be understood that the "size supplement" in this application indicates that a quantity of subcarriers of a resource unit whose size is supplemented is close to or the same as a quantity of subcarriers of an unpunctured distributed resource unit, and does not necessarily indicate that the two quantities are the same. Optionally, the quantity of subcarriers of the resource unit whose size is supplemented may be greater than the quantity of subcarriers of the unpunctured distributed resource unit.

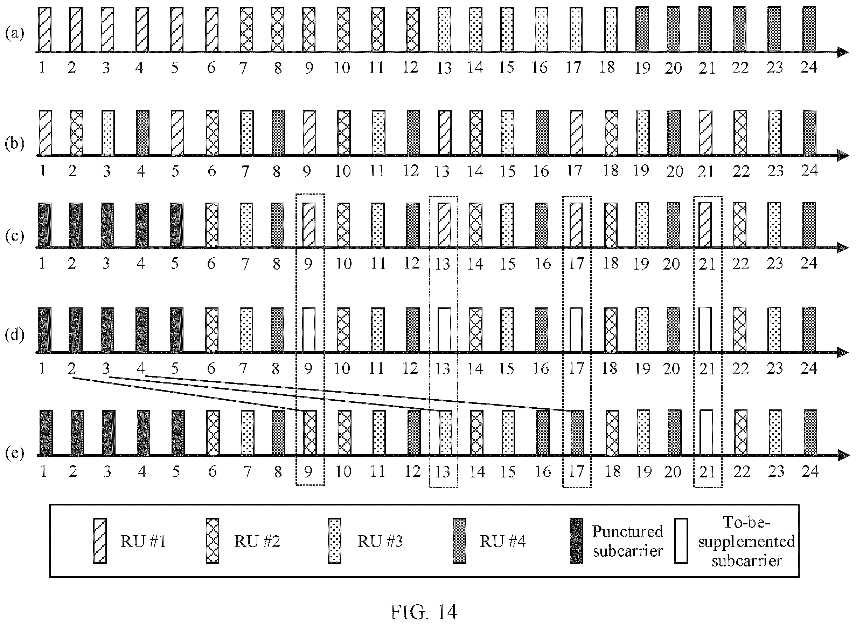

In still another example, a quantity of subcarriers in the first frequency range is less than a quantity of subcarriers of the third resource unit, so that a quantity of subcarriers in the second subcarrier set is greater than a quantity of subcarriers in the third subcarrier set. For example, the third resource unit is a distributed resource unit specified by the first station, the first frequency range is a frequency range occupied by a punctured channel, and the quantity of subcarriers in the first frequency range is less than the quantity of subcarriers of the third resource unit. In this case, subcarriers of a distributed RU that is all punctured in frequency domain can be supplemented to a size that is the same as that of an unpunctured distributed RU. In this case, the supplementary manner in FIG. 11 may still be used. Only one or more supplementary subcarriers that have high frequencies are not used. Descriptions are provided below by using an example with reference to FIG. 14.

For example, FIG. 14 is another diagram of a tone plan according to this embodiment of this application. In (a), (b), (c), (d), and (e) in FIG. 14, a horizontal coordinate represents a frequency or subcarrier sorting order.

For (a) and (b) in FIG. 14, refer to (a) and (c) in FIG. 11 respectively. Details are not described herein again.

As shown in (c) in FIG. 14, it is assumed that punctured subcarriers are 5 continuous subcarriers, and occupy the subcarriers 1, 2, 3, 4, and 5 (another example of the first frequency range). The third resource unit is the same as that in the example in FIG. 11, and is still the unpunctured distributed RU #1, that is, includes the subcarriers 1, 5, 9, 13, 17, and 21. In this case, there are still 4 subcarriers, namely, the subcarriers 9, 13, 17, and 21, in the second subcarrier set. Different from that in the example in FIG. 11, there are 3 subcarriers, namely, subcarriers 2, 3, and 4, in the third subcarrier set. Therefore, a punctured distributed RU #2 indicated by the first station includes subcarriers 6, 9, 10, 14, 18, and 22, a distributed RU #3 whose size is supplemented still includes the subcarriers 7, 11, 13, 15, 19, and 23, and a distributed RU #4 whose size is supplemented still includes the subcarriers 8, 12, 16, 17, 20, and 24. In other words, the subcarrier 21 in the second subcarrier set is not used.

It should be further understood that the foregoing example is described by using an example in which the third resource unit is the unpunctured distributed RU #1. However, the third resource unit may alternatively be any one of the unpunctured distributed RU #2, the unpunctured distributed RU #3, or the unpunctured distributed RU #4, and is used as supplementary subcarriers of the other three punctured distributed RUs. This is not limited in this application.

In a possible implementation, when selecting the supplementary subcarriers, the first station may select, as much as possible, a distributed RU with a larger quantity of subcarriers in the intersection set of the first frequency range. This can reduce a location change of a subcarrier of a distributed RU whose size is supplemented relative to that of an unpunctured distributed RU.

In addition, in this application, the second resource unit may be considered as the distributed resource unit corresponding to the second continuous resource unit. When the third resource unit is the distributed resource unit corresponding to the first continuous resource, a mapping manner between the third resource unit and the first continuous resource unit may be the same as a mapping manner between the second resource unit and the second continuous resource unit.

In an implementation, the first information is an index entry, and there is a correspondence between the index entry and the first resource unit.

Specifically, the index entry corresponding to the first resource unit may be directly added, and the first station may indicate the first resource unit to the second station by using the index entry.

In this application, the index entry may also be referred to as an index (index) or an index value (index value), and may be understood as an index value in an index table. For example, if a field #A is 2 bits, a value of the field #A may be 0, 1, 2, or 3, and the 4 values indicate different meanings, the index entry refers to the value of the field #A, and the meaning indicated by the index entry may be obtained by using the index entry.

Optionally, in this implementation, the first information may be carried in a user information (user info) field in a trigger frame. For example, the first information may be located in a resource unit allocation (RU Allocation) subfield and/or a principal and subordinate (principal and subordinate, PS) 160 MHz indication subfield.

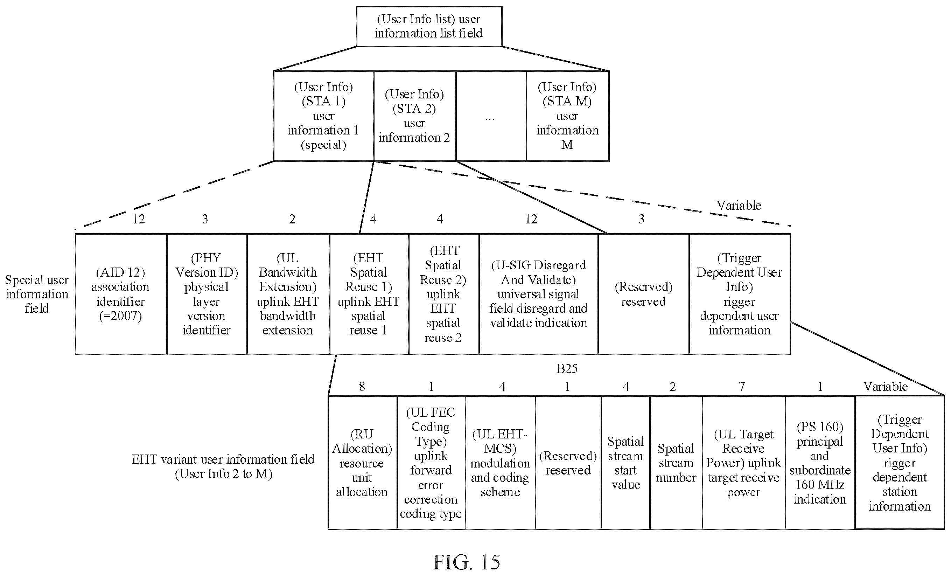

FIG. 15 is a diagram of a user information list field in the trigger frame according to this embodiment of this application. It should be understood that the trigger frame includes resource unit allocation information and other parameters that are used by one or more second stations to send an extremely high throughput trigger-based physical layer protocol data unit (extremely high throughput trigger-based physical layer protocol data unit, EHT TB PPDU). After receiving the trigger frame, the second station obtains, through parsing, the user information field that matches an association identifier (association identifier, AID) of the second station, and then sends the EHT TB PPDU on a resource unit indicated by the resource unit allocation subfield and/or the PS 160 MHz indication subfield in the user information field.

Optionally, in this implementation, the first information may be carried in a triggered response scheduling control subfield (triggered response scheduling control subfield, TRS control subfield) carried in a PPDU.

In another implementation, the first information includes first sub-information and second sub-information, the first sub-information indicates the first frequency range, and the second sub-information indicates the second resource unit.

In an example, the first sub-information may be a 16-bit bitmap (bitmap), and the first sub-information may indicate whether one or more 20 MHz subcarriers are punctured in a range of a 320 MHz bandwidth, where each of the 16 bits indicates whether the 20 MHz subcarrier is punctured. This manner may cover all bandwidths. It should be understood that the puncture herein refers to a range in which distributed subcarriers need to be punctured, and the range may be greater than or equal to a channel puncture range.

In another example, the first sub-information may be a 4-bit bitmap (bitmap), and the first sub-information may indicate whether one or more 20 MHz subcarriers are punctured in a range of an 80 MHz bandwidth. This manner may be used in a scenario in which distributed RUs are distributed within a maximum of 80 MHz.

In still another example, the first information may be fixed z bits, and the z bits indicate a puncture status in an entire PPDU bandwidth. For example, z=4. For a 320 MHz PPDU, each of the 4 bits indicates whether one 80 MHz subcarrier is punctured. For a 160 MHz PPDU, each of the 4 bits indicates whether one 40 MHz subcarrier is punctured.

In addition, the first frequency range may be indicated in combination with a field related to channel puncture, or may be directly indicated by a field related to channel puncture. For example, a disabled sub-channel bitmap field (disabled sub-channel bitmap field) indicates a static puncture status of a channel, and the first sub-information may be directly indicated by using the disabled sub-channel bitmap field. In this case, the first frequency range is a channel puncture range. A granularity of channel puncture may be defined by a protocol, or may be specified by an AP or a STA, for example, may be 20 MHz, 40 MHz, or 80 MHz. The granularity of channel puncture is a bandwidth corresponding to each bit in the disabled sub-channel bitmap field.

When the first station indicates the first frequency range to the second station, the second station may obtain a punctured distributed resource unit (an example of the first resource unit) based on an indication of an unpunctured distributed resource unit. Indication manners of the unpunctured distributed resource unit may be as follows.
Manner 1: The unpunctured distributed resource unit is directly indicated by an index entry.
Manner 2: A corresponding continuous resource unit (information #A) is indicated, and an allocated distributed resource unit (information #B) is indicated.

Manner 1 may be understood as follows: The second sub-information is the index entry. Manner 2 may be understood as follows: The second information includes the information #A and the information #B, the information #A indicates a continuous resource unit, and the information #B indicates use of the continuous resource unit or use of a distributed resource unit corresponding to the continuous resource unit. For example, the information #B is 1 bit. A correspondence between a continuous resource unit and a distributed resource may be defined in a standard.

In this implementation, the first sub-information may be carried in a common information field in a trigger frame. For example, the first sub-information is carried in a newly added bit of the common information field. The second sub-information may be carried in a user information field in the trigger frame. For example, the second sub-information is carried in a resource unit allocation subfield and/or a PS 160 MHz indication subfield.

Optionally, content in the common information field may alternatively be carried in a special user information field. For example, if a length of the common information field is insufficient, an AID of the special user information field may be set to a special value, so that the special user information field may be used as an extension of the common information field.

Optionally, the method 200 further includes: The first station sends second information to the second station, where the second information indicates the second station to transmit data on the first resource unit or transmit data on the second resource unit.

Specifically, if the second information indicates the second station to transmit the data on the second resource unit, the first station transmits the data on the unpunctured distributed resource unit; or if the second information indicates the second station to transmit the data on the first resource unit, the first station transmits the data on the punctured distributed resource unit or the distributed resource unit whose size is supplemented.

In an implementation, the information #B, the second information, and the third information may be carried in a same field. For example, the field is 2 bits, and four values of the field are represented in Table 2.

**Table 2**

| Index (2 bits) | Meaning |
|---|---|
| 0 | A first resource unit is a continuous resource unit. |
| 1 | The first resource unit is an unpunctured distributed resource unit. |
| 2 | The first resource unit is a punctured distributed resource unit. |
| 3 | The first resource unit is a punctured distributed resource unit whose size is supplemented. |

The information #B may include the indexes 0 and 1, the second information may include the indexes 1 and 2, and the third information may include the indexes 2 and 3.

Optionally, Table 2 is merely an implementation. A sequence in which meanings corresponding to indexes appear is not limited in this application. In other words, a correspondence between an index and a meaning may alternatively be another manner. For example, when the index is 0, it may indicate that the first resource unit is a punctured distributed resource unit; or when the index is 1, it may indicate that the first resource unit is a punctured distributed resource unit whose size is supplemented.

According to the method provided in the foregoing embodiment, the first resource unit and the continuous resource unit in the first frequency range may coexist, and no collision occurs. For example, the first station may allocate, to one user, a first 20 MHz bandwidth on 80 MHz as a continuous 242-tone RU, or may allocate, to another user, a punctured distributed 242-tone RU or a punctured distributed 242-tone RU whose size is supplemented, and no collision occurs.

Optionally, there may be the following limits: After an RU is allocated to a user as a continuous RU #A, a distributed RU that meets the following rule cannot be allocated: Subcarriers of a continuous RU corresponding to the distributed RU and the continuous RU #A overlap.

The foregoing describes the method embodiments in embodiments of this application, and the following describes corresponding apparatus embodiments. It should be understood that descriptions of the apparatus embodiments correspond to the descriptions of the method embodiments, and therefore for a part that is not described in detail, refer to the foregoing method embodiments.

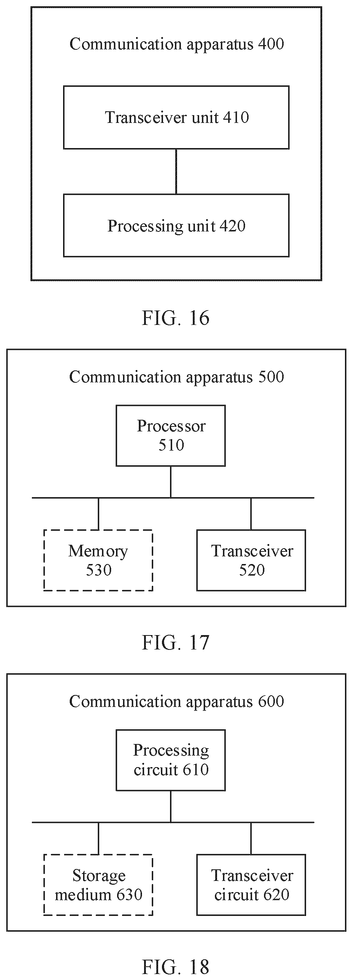

FIG. 16 is a diagram of a communication apparatus according to an embodiment of this application. As shown in FIG. 16, the apparatus 400 may include a transceiver unit 410 and/or a processing unit 420. The transceiver unit 410 may communicate with the outside, and the processing unit 420 is configured to process data/information. The transceiver unit 410 may also be referred to as a communication interface or a communication unit.

In a possible implementation, the apparatus 400 may be the first station in the foregoing method 200, or may be a chip configured to implement a function of the first station in the foregoing method 200. The apparatus 400 may implement a procedure performed by the first station in the foregoing method 200. The processing unit 420 is configured to perform a processing-related operation of the first station in the foregoing method 200, and the transceiver unit 410 is configured to perform receiving and sending-related operations of the first station in the foregoing method 200.

For example, the processing unit 420 is configured to generate first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit; and the transceiver unit 410 is configured to send the first information to a second station.

Optionally, the transceiver unit 410 is further configured to: send second information to the second station, where the second information indicates the second station to transmit data on the first resource unit or transmit data on the second resource unit.

Optionally, the first frequency range includes a frequency range occupied by a punctured channel.

Optionally, the first frequency range includes a frequency range occupied by one or more continuous resource units.

Optionally, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

Optionally, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

Optionally, the first frequency range is a frequency range occupied by a first continuous resource unit, and the third resource unit is a distributed resource unit corresponding to the first continuous resource unit.

Optionally, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

Optionally, the transceiver unit 410 is further configured to send third information to the second station, where the third information indicates whether the first resource unit includes the subcarrier in the first subcarrier set.

Optionally, the first information is an index entry, and there is a correspondence between the index entry and the first resource unit.

Optionally, the first information is carried in a triggered response scheduling control subfield or a user information field in a trigger frame.

Optionally, the first information includes first sub-information and second sub-information, the first sub-information indicates the first frequency range, and the second sub-information indicates the second resource unit.

Optionally, the first sub-information is carried in a common information field in the trigger frame, and the second sub-information is carried in a user information field in the trigger frame.

It should be understood that the foregoing content is merely used an example for understanding. The apparatus 400 can further implement other steps, actions, or methods related to the first station in the method 200. Details are not described herein.

In another possible implementation, the apparatus 400 may implement a procedure performed by the second station in the foregoing method embodiment 200, and the transceiver unit 410 is configured to perform receiving and sending-related operations of the second station in the foregoing method embodiment 200.

Optionally, in this implementation, the apparatus 400 may further include the processing unit 420. The processing unit 420 is configured to perform a processing-related operation of the second station in the foregoing method embodiment 200.

For example, the transceiver unit 410 is configured to receive first information, where the first information indicates a first resource unit, the first resource unit includes a subcarrier in a difference set between a subcarrier set of a second resource unit and a subcarrier set of a first frequency range, a part of subcarriers of the second resource unit are located in the first frequency range, and the second resource unit is a distributed resource unit. The transceiver unit 410 is further configured to transmit data on the first resource unit.

Optionally, the transceiver unit 410 is further configured to: receive second information, where the second information indicates a second station to transmit the data on the first resource unit or transmit the data on the second resource unit.

Optionally, the first frequency range includes a frequency range occupied by a punctured channel.

Optionally, the first frequency range includes a frequency range occupied by one or more continuous resource units.

Optionally, the first resource unit further includes a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

Optionally, the subcarrier in the first subcarrier set is located in a second subcarrier set, the second subcarrier set is a difference set between a subcarrier set of a third resource unit and the subcarrier set of the first frequency range, and the third resource unit is a distributed resource unit.

Optionally, the first frequency range is a frequency range occupied by a first continuous resource unit, and the third resource unit is a distributed resource unit corresponding to the first continuous resource unit.

Optionally, in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

Optionally, the transceiver unit 410 is further configured to receive third information from the second station, where the third information indicates whether the first resource unit includes the subcarrier in the first subcarrier set.

Optionally, the first information is an index entry, and there is a correspondence between the index entry and the first resource unit.

Optionally, the first information is carried in a triggered response scheduling control subfield or a user information field in a trigger frame.

Optionally, the first information includes first sub-information and second sub-information, the first sub-information indicates the first frequency range, and the second sub-information indicates the second resource unit.

Optionally, the first sub-information is carried in a common information field in the trigger frame, and the second sub-information is carried in a user information field in the trigger frame.

It should be understood that the foregoing content is merely used an example for understanding. The apparatus 400 can further implement other steps, actions, or methods related to the second station in the method 200. Details are not described herein.

It should be understood that the apparatus 400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 400 has functions of implementing corresponding steps performed by the first station in the foregoing methods, or the apparatus 400 has functions of implementing corresponding steps performed by the second station in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

**In** addition, the transceiver unit may alternatively be a transceiver circuit (for example, may include a receiving circuit and a sending circuit), and the processing unit may be a processing circuit. **In** embodiments of this application, the apparatus in FIG. 16 may be the first station or the second station in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 17 is another diagram of a structure of a communication apparatus according to an embodiment of this application. As shown in FIG. 17, the communication apparatus 500 includes at least one processor 510 and a transceiver 520. The processor 510 is coupled to a memory, and is configured to execute instructions stored in the memory, to control the transceiver 520 to send a signal and/or receive a signal. Optionally, the communication apparatus 500 further includes the memory 530, configured to store the instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 1020 may be a communication interface or an interface circuit.

When the communication apparatus 500 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps of the foregoing methods may be implemented by using an integrated logic circuit of hardware in the processor or instructions in a form of software. The steps of the method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

FIG. 18 is another diagram of a structure of a communication apparatus according to an embodiment of this application. As shown in FIG. 18, the apparatus 600 includes a processing circuit 610 and a transceiver circuit 620. The processing circuit 610 and the transceiver circuit 620 communicate with each other through an internal connection path. The processing circuit 610 is configured to execute instructions to control the transceiver circuit 620 to send a signal and/or receive a signal.

Optionally, the apparatus 600 may further include a storage medium 630. The storage medium 630 communicates with the processing circuit 610 and the transceiver circuit 620 through an internal connection path. The storage medium 630 is configured to store instructions, and the processing circuit 610 may execute the instructions stored in the storage medium 630.

In a possible implementation, the apparatus 600 is configured to implement procedures corresponding to the first station in the foregoing method embodiments.

In another possible implementation, the apparatus 600 is configured to implement procedures corresponding to the second station in the foregoing method embodiments.

According to the methods provided in embodiments of this application, this application further provides a computer program product. The computer program product includes computer program code. When the computer program code is run on a computer, the computer is enabled to perform the method in the embodiment shown in FIG. 3(a) and FIG. 3(b).

According to the method provided in embodiments of this application, this application further provides a computer-readable medium. The computer-readable medium stores program code, and when the program code is run on a computer, the computer is enabled to perform the methods in the foregoing method embodiments.

According to the method provided in embodiments of this application, this application further provides a system, including the foregoing first station and/or second station.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource configuration method, comprising:
generating, by a first station, first information, wherein the first information indicates a first resource unit, the first resource unit comprises a subcarrier in a difference set between a subcarrier set of a second resource unit and a subcarrier set of a first frequency range, a part of subcarriers of the second resource unit are located in the first frequency range, and the second resource unit is a distributed resource unit; and
sending, by the first station, the first information to a second station.

2. The method according to claim 1, wherein the method further comprises:
sending, by the first station, second information to the second station, wherein the second information indicates the second station to transmit data on the first resource unit or transmit data on the second resource unit.

3. A resource configuration method, comprising:
receiving, by a second station, first information, wherein the first information indicates a first resource unit, the first resource unit comprises a subcarrier in a difference set between a subcarrier set of a second resource unit and a subcarrier set of a first frequency range, a part of subcarriers of the second resource unit are located in the first frequency range, and the second resource unit is a distributed resource unit; and
transmitting, by the second station, data on the first resource unit.

4. The method according to claim 3, wherein the method further comprises:
receiving, by the second station, second information, wherein the second information indicates the second station to transmit the data on the first resource unit or transmit the data on the second resource unit.

5. The method according to any one of claims 1 to 4, wherein the first frequency range comprises a frequency range occupied by a punctured channel.

6. The method according to any one of claims 1 to 4, wherein the first frequency range comprises a frequency range occupied by one or more continuous resource units.

7. The method according to any one of claims 1 to 6, wherein the first resource unit further comprises a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

8. The method according to claim 7, wherein the subcarrier in the first subcarrier set is located in a second subcarrier set, the second subcarrier set is a difference set between a subcarrier set of a third resource unit and the subcarrier set of the first frequency range, and the third resource unit is a distributed resource unit.

9. The method according to claim 8, wherein the first frequency range is a frequency range occupied by a first continuous resource unit, and the third resource unit is a distributed resource unit corresponding to the first continuous resource unit.

10. The method according to claim 8 or 9, wherein in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

11. The method according to any one of claims 1 to 10, wherein the first information is an index entry, and there is a correspondence between the index entry and the first resource unit.

12. The method according to claim 11, wherein the first information is carried in a triggered response scheduling control subfield or a user information field in a trigger frame.

13. The method according to any one of claims 1 to 12, wherein the first information comprises first sub-information and second sub-information, the first sub-information indicates the first frequency range, and the second sub-information indicates the second resource unit.

14. The method according to claim 13, wherein the first sub-information is carried in a common information field in the trigger frame, and the second sub-information is carried in a user information field in the trigger frame.

15. A communication apparatus, comprising:
a processing unit, configured to generate first information, wherein the first information indicates a first resource unit, the first resource unit comprises a subcarrier in a difference set between a subcarrier set of a second resource unit and a subcarrier set of a first frequency range, a part of subcarriers of the second resource unit are located in the first frequency range, and the second resource unit is a distributed resource unit; and
a transceiver unit, configured to send the first information to a second station.

16. The apparatus according to claim 15, wherein the transceiver unit is further configured to:
send second information to the second station, wherein the second information indicates the second station to transmit data on the first resource unit or transmit data on the second resource unit.

17. A communication apparatus, comprising:
a transceiver unit, configured to receive first information, wherein the first information indicates a first resource unit, the first resource unit comprises a subcarrier in a difference set between a subcarrier set of a second resource unit and a subcarrier set of a first frequency range, a part of subcarriers of the second resource unit are located in the first frequency range, and the second resource unit is a distributed resource unit; and
the transceiver unit is further configured to transmit data on the first resource unit.

18. The apparatus according to claim 17, wherein the transceiver unit is further configured to:
receive second information, wherein the second information indicates a second station to transmit the data on the first resource unit or transmit the data on the second resource unit.

19. The apparatus according to any one of claims 15 to 18, wherein the first frequency range comprises a frequency range occupied by a punctured channel.

20. The apparatus according to any one of claims 15 to 18, wherein the first frequency range comprises a frequency range occupied by one or more continuous resource units.

21. The apparatus according to any one of claims 15 to 20, wherein the first resource unit further comprises a subcarrier in a first subcarrier set, and a quantity of subcarriers in the first subcarrier set is less than or equal to a quantity of subcarriers in an intersection set between the subcarrier set of the second resource unit and the subcarrier set of the first frequency range.

22. The apparatus according to claim 21, wherein the subcarrier in the first subcarrier set is located in a second subcarrier set, the second subcarrier set is a difference set between a subcarrier set of a third resource unit and the subcarrier set of the first frequency range, and the third resource unit is a distributed resource unit.

23. The apparatus according to claim 22, wherein the first frequency range is a frequency range occupied by a first continuous resource unit, and the third resource unit is a distributed resource unit corresponding to the first continuous resource unit.

24. The apparatus according to claim 22 or 23, wherein in ascending order of frequencies corresponding to subcarriers, if a subcarrier of the second resource unit is an i^{th} subcarrier in a third subcarrier set, the subcarrier in the first subcarrier set is an i^{th} subcarrier in the second subcarrier set, the third subcarrier set is a difference set between the subcarrier set of the first frequency range and the subcarrier set of the third resource unit, and i is a positive integer.

25. The apparatus according to any one of claims 15 to 24, wherein the first information is an index entry, and there is a correspondence between the index entry and the first resource unit.

26. The apparatus according to claim 25, wherein the first information is carried in a triggered response scheduling control subfield or a user information field in a trigger frame.

27. The apparatus according to any one of claims 15 to 26, wherein the first information comprises first sub-information and second sub-information, the first sub-information indicates the first frequency range, and the second sub-information indicates the second resource unit.

28. The apparatus according to claim 27, wherein the first sub-information is carried in a common information field in the trigger frame, and the second sub-information is carried in a user information field in the trigger frame.

29. A communication apparatus, comprising:
a memory, configured to store computer instructions; and
a processor, configured to execute the computer instructions stored in the memory, to enable the communication apparatus to perform the method according to any one of claims 1 to 14.

30. A chip, comprising a processor and a memory, wherein the memory is configured to store a program or instructions, and when the program or the instructions are executed by the processor, the chip is enabled to perform the method according to any one of claims 1 to 14.

31. A computer-readable storage medium, storing a computer program or instructions, wherein when the computer program or the instructions are executed, a computer is enabled to perform the method according to any one of claims 1 to 14.

32. A computer program product, comprising computer program code, wherein when the computer program code is run on a computer, the computer is enabled to implement the method according to any one of claims 1 to 14.
